(19) Europäisches Patentamt / European Patent Office / Office européen des brevets

(11) **EP 1 975 442 B1**

(12) **EUROPEAN PATENT SPECIFICATION**

(45) Date of publication and mention
of the grant of the patent:
**19.06.2019 Bulletin 2019/25**

(51) Int Cl.:
***F16D 48/06*** *(2006.01)*

(21) Application number: **08003280.8**

(22) Date of filing: **22.02.2008**

(54) **Vehicle having a clutch controller and method for controlling clutch**

Fahrzeug mit Kupplungssteuerungssystem und Verfahren für die Steuerung der Kupplung

Véhicule avec système d'assistance d'embrayage et procédé pour cette assistance

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **23.02.2007 JP 2007043645
06.09.2007 JP 2007231131**

(43) Date of publication of application:
**01.10.2008 Bulletin 2008/40**

(73) Proprietor: **Yamaha Hatsudoki Kabushiki Kaisha
Iwata-shi, Shizuoka-ken 438-8501 (JP)**

(72) Inventor: **Minami, Kengo
Iwata-shi,
Shizuoka-ken 438-8501 (JP)**

(74) Representative: **Grünecker Patent- und
Rechtsanwälte
PartG mbB
Leopoldstraße 4
80802 München (DE)**

(56) References cited:
**EP-A2- 1 617 058        DE-A1- 19 850 978
DE-A1-102005 030 534        US-A1- 2005 221 958**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a technology for engaging or disengaging a clutch by an actuator.

Conventional semi-automatic vehicles, which actuate an actuator to engage or disengage a clutch, use a technology for controlling relative positions of a drive-side member and a driven-side member of the clutch (the degree of engagement of the clutch) based on a difference in rotational speed between these members during engaging operation of the clutch (for example, Patent Document 1).

Patent Document 1: JP-A-2001-146930

DE 10 2005 030 534 A1 relates to a method for start control of motor vehicle with automated clutch unit. DE 10 2005 030 534 A1 discloses also that the actual speed of revolution is determined as well as a set value for the clutch momentum using a first curve specifying the clutch momentum as a function of the actual speed of revolution. A set value for the speed of revolution for the actual value and the accelerator position is determined. The set value of the clutch momentum is changed when the actual speed of revolution is different from the set value. The clutch is adjusted to the new set value. An independent claim is also included for a device for controlling the starting of motor vehicle.

EP 1 617 058 A2 discloses a method for the controlling of a controllable torque transmission unit of especially motor vehicle engines in drive trains entails establishing a starting nominal RPM of the internal combustion engine to be maintained, establishing the actual torque of the engine during starting, and establishing the target torque of the torque transmission unit, whereby the target torque is determined as a function of at least the actual torque of the engine. The starting nominal RPM to be maintained is determined from an engine characteristic depending upon the accelerator angle, and the target torque is additionally a function of the actual engine RPM to the nominal engine RPM.

US 2005/221958 A1 discloses a control strategy that is provided for controlling engagement of a clutch during vehicle launch. A feed-back input command and a feed-forward input command are utilized and summed to determine a clutch control command. The feed back input command uses a reference slip profile having a low speed portion and a high speed portion. In the low speed portion, the slip is a function of engine speed. In the high speed portion, the slip is a function of transmission output speed or vehicle speed.

The technology is designed to control the degree of engagement of the clutch based on the difference in rotational speed between the drive-side member and the driven-side member. This, however, can prevent appropriate torque from being constantly transmitted via the clutch, and thus can impair riding comfort. For example, in case where the timing of discontinuing a half-clutch state is too early, the torque transmitted from the drive-side member to the driven-side member sharply increases. This can cause the rider to feel shocks. An additional technology is also proposed, in which a half-clutch state is maintained until the difference in rotational speed is almost zero. However, this results in excessively low torque being continuously transmitted to the driven-side member for a long time period. Thus, the rider can perceive that the vehicle decelerates excessively.

The present invention is made in view of the foregoing problems, and an object of the invention is to provide a vehicle with a clutch controller, in particular a straddle-type vehicle, and a method for controlling a clutch which allow appropriate torque to be transmitted to the downstream side via the clutch and which prevent an engine speed from excessively increasing or decreasing during engaging operation of the clutch.

This objective is solved by a vehicle having an engine and a clutch means provided in a torque transmission path, said clutch means comprising an actuator for changing the degree of engagement between a drive-side member and a driven-side member of the clutch, the members being located downstream of the engine in the torque transmission path, and a clutch controller, said clutch controller comprising: an actual torque obtaining section for obtaining torque transmitted from the drive-side member to a downstream mechanism of the torque transmission path as actual transmission torque, the downstream mechanism including the driven-side member; a request torque obtaining section for obtaining torque determined based on an accelerator operation as request transmission torque; an engine torque obtaining section for obtaining torque outputted from the engine as engine torque; and a control unit, said control unit being configured to determine an operation range of the engine, and, based on the determination results, to perform either a first control process or a second control process to actuate the actuator, both control processes being dependent on torque difference, wherein in a first engine operation range the control unit is configured to apply the first control process under which the actuator is actuated based on a difference between the actual transmission torque and the request transmission torque, such that the actual transmission torque approximates the request transmission torque, and, in a second operation range, to apply the second control process under which the actuator is actuated such that the actual transmission torque approximates the engine torque, in place of the first control process, wherein the control unit is configured to perform the second control process in place of the first control process, if the engine operates in an operation range in which the engine torque increases as the engine speed increases.

Further, preferably the actual torque obtaining section is configured to calculate the actual transmission torque based on the engine torque and inertia torque produced due to inertia of a mechanism upstream of the drive-side member in the torque transmission path.

Yet further still, the control unit is configured to perform the second control process in place of the first control process, under the additional constraint that the engine operates in an operation range in which the engine speed exceeds a predetermined value.

Preferably, the control unit is configured to actuate the actuator based on the difference between the actual transmission torque and the engine torque, such that the actual transmission torque approximates the engine torque, under the second control process.

Further, preferably the control unit further includes a target torque setting section for setting a target transmission torque at torque, which is supposed to be transmitted from the drive-side member to the downstream mechanism, and is configured to actuate the actuator according to a difference between the target transmission torque and the actual transmission torque, and the target torque setting section is configured to set the target transmission torque at the request transmission torque under the first control process, while setting the target transmission torque at the engine torque under the second control process.

For the method aspect, this objective is solved by a method of controlling a clutch, comprising the steps of: obtaining torque transmitted from a drive-side member of the clutch to a downstream mechanism of a torque transmission path as actual transmission torque, the downstream mechanism including a driven-side member of the clutch; obtaining torque determined based on accelerator operation as request transmission torque; obtaining engine torque outputted from an engine; determining the engine operation range, performing a first control process when the engine is in a first operation range, and performing a second control process, in place of the first control process, when the engine operates in a second operation range.

Preferably, this method further comprises the steps of: determining the engine operation range; performing the first control process, under which an actuator, which changes the degree of engagement between the drive-side member and the driven-side member, is actuated based on a difference between the actual transmission torque and the request transmission torque, such that the actual transmission torque approximates the request transmission torque in a first operation range, and performing the second control process, under which the actuator is actuated such that the actual transmission torque approximates the engine torque, in place of the first control process in a second operation range.

In the following, the present invention is explained in greater detail with respect to several embodiments thereof in conjunction with the accompanying drawings, wherein:

FIG. 1          is a side view of a motorcycle provided with a clutch controller according to an embodiment of the present teaching,

FIG. 2          is a schematic view of a mechanism provided on a torque transmission path of the motorcycle,

FIG. 3          is a block diagram illustrating a configuration of the clutch controller,

FIG. 4          illustrates an operation range of an engine,

FIGs. 5(a) to 5(c)     are time charts respectively showing examples of changes in degree of engagement of a clutch, target transmission torque Ttg, actual transmission torque Tac, and EG torque TEac in the case when the request follow-up control is performed,

FIG. 6          illustrates changes in engine speed and EG torque TEac in the case when the request follow-up control is performed,

FIG. 7          illustrates changes in engine speed and engine torque in the case when the control is performed such that the actual transmission torque approximates the request transmission torque in the operation range in which the engine torque (EG torque) increases as the engine speed increases,

FIGs. 8(a) to 8(c)     are time charts respectively showing examples of changes in degree of engagement of the clutch, target transmission torque Ttg, actual transmission torque Tac, and EG torque TEac in the case when the rotational speed maintaining control is performed,

FIG. 9          illustrates changes in engine speed and EG torque TEac in the case when the rotational speed maintaining control is performed,

FIGs. 10(a) to 10(c)     are time charts respectively showing examples of changes in degree of engagement of the clutch, target transmission torque Ttg, actual transmission torque Tac, and EG torque TEac in the case when the rotational speed induction control is performed,

FIG. 11                      illustrates changes in engine speed and EG torque TEac in the case when the rotational speed induction control is performed,

FIG. 12                      is a block diagram illustrating the processing functions of the control unit,

FIG. 13                      is a graph showing an example of the relationship between the request transmission torque Treq and the accelerator displacement,

FIG. 14                      illustrates an example of a range determining table,

FIG. 15                      illustrates an example of an EG torque table,

FIG. 16                      is a graph showing an example of the relationship between the command actuation amount and the torque deviation,

FIG. 17                      is a graph showing another example of the relationship between the command actuation amount and the torque deviation,

FIG. 18                      is a flowchart showing an example of the processing steps executed by the control unit, and

FIG. 19                      is a flowchart showing another example of the processing steps executed by the control unit.

Description of Reference Numerals:

1: motorcycle
2: front wheel
3: rear wheel
4: front fork
5: steering handlebars
10: clutch controller
11: control unit
11a: EG torque obtaining section
11b: actual torque obtaining section
11c: inertia torque obtaining section
11d: request torque obtaining section
11e: range determining section
11f: target torque setting section
12: storage unit
13: clutch actuator drive circuit
14: clutch actuator
15: shift actuator drive circuit
16: shift actuator
17: accelerator operation detector
18: engine speed detector
19: vehicle speed detector
21: gear position detector
22: clutch position detector
23a,23b: clutch rotational speed detector
9a: shift-up switch
9b: shift-down switch
30: engine
31: cylinder
32: piston
33: intake port
34: crankshaft
35: intake pipe

36: primary deceleration mechanism
37: throttle body
40: clutch
41: drive-side member
42: driven-side member
43: push rod
50: secondary deceleration mechanism
51: gearbox
52: main shaft
53a, 54a, 53b, 54b: shift gear
55: countershaft
56: gearshift mechanism
57: transmission mechanism

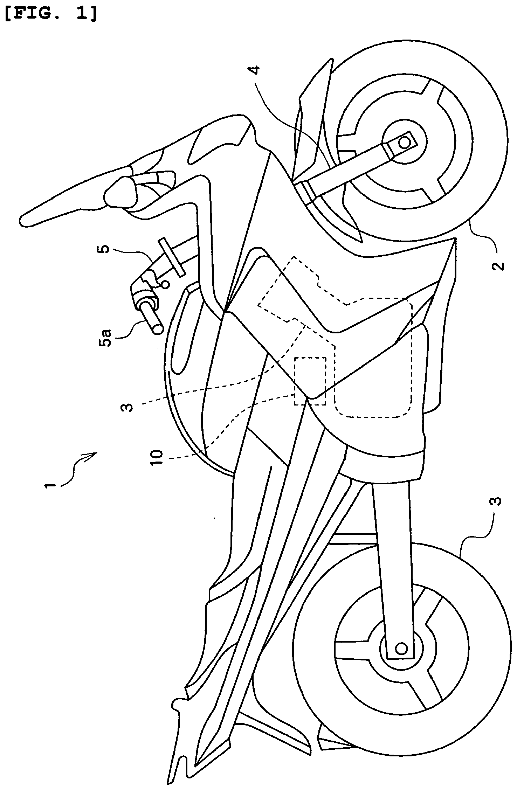

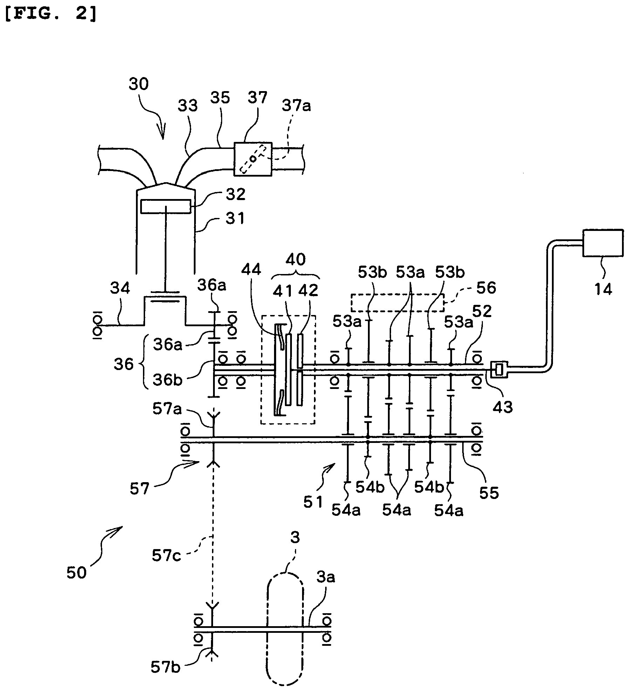

An embodiment of the present teaching is described below with reference to the drawings. FIG. 1 is a side view of a motorcycle 1 provided with a clutch controller 10 as an example of the embodiment of the teaching. FIG. 2 is a schematic view of a mechanism provided on a torque transmission path of the motorcycle 1.

As shown in FIG. 1 or FIG. 2, the motorcycle 1 is provided not only with the clutch controller 10, but also with an engine 30, a primary deceleration mechanism 36, a clutch 40, a secondary deceleration mechanism 50, a front wheel 2, and a rear wheel 3.

As shown in FIG. 1, the front wheel 2 is located at a front part of a vehicle body, and supported by a lower end of a front fork 4. Handlebars 5 are connected to the top of the front fork 4. An acceleration grip 5a to be gripped by a rider is mounted to the right end of the handlebars 5. The acceleration grip 5a is connected to a throttle valve 37a provided in a throttle body 37 (see FIG. 2). The throttle valve 37a is opened according to rider's accelerator operation, and a certain amount of air, which depends on the opening of the throttle valve 37a, is delivered to the engine 30. The motorcycle 1 may be provided with an electronically-controlled throttle device. In this case, a sensor for detecting the rider's accelerator operation and an actuator for opening the throttle valve 37a according to the accelerator operation detected by the sensor are provided.

As shown in FIG. 2, the engine 30 has a cylinder 31, a piston 32, an intake port 33, and a crankshaft 34. The throttle body 37 is connected to the intake port 33 via an intake pipe 35.

The throttle valve 37a is placed in an intake passage of the throttle body 37. Mixture of air, which flows through the intake passage of the throttle body 37, and fuel, which is supplied from a fuel supplier (not shown, for example, injector or carburetor), is delivered to an interior of the cylinder 31. An ignition plug (not shown) faces the interior of the cylinder 31 and ignites the air-fuel mixture within the cylinder 31. Burning the air-fuel mixture causes the piston 32 to reciprocate within the cylinder 31. The reciprocating motion of the piston 32 is converted into rotating motion by the crankshaft 34, thereby outputting torque from the engine 30.

The primary deceleration mechanism 36 includes: a drive-side primary deceleration gear 36a, which operates in conjunction with the crankshaft 34; and a driven-side primary deceleration gear 36b, which meshes with the primary deceleration gear 36a. The primary deceleration mechanism 36 decelerates the rotation of the crankshaft 34 according to a gear ratio between these gears.

The clutch 40 transmits and shuts off torque output from the engine 30 to the downstream side of the torque transmission path. The clutch 40 is a friction clutch, for example, and is provided with a drive-side member 41 and a driven-side member 42. The drive-side member 41 includes a friction disk, for example, and rotates together with the primary deceleration gear 36b. The driven-side member 42 includes a clutch disk, for example, and rotates together with a main shaft 52. The drive-side member 41 and the driven-side member 42 are pressed against each other by elastic force of a clutch spring 44 at the time of engaging the clutch 40, so that the torque of the engine 30 is transmitted from the drive-side member 41 to the driven-side member 42. In turn, at the time of disengaging the clutch 40, the driven-side member 42 is moved away from the drive-side member 41, so that torque transmission from the drive-side member 41 is interrupted. The clutch controller 10 is provided with a clutch actuator 14 as will be discussed later. The clutch actuator 14 performs engaging operation of the clutch 40 (switching from the disengaged state to the engaged state) and disengaging operation thereof (switching from the engaged state to the disengaged state).

The secondary deceleration mechanism 50 is designed to decelerate the rotation of the main shaft 52 and transmit the decelerated rotation to an axle 3a of the rear wheel 3. The secondary deceleration mechanism 50 is provided with a gearbox 51 and a transmission mechanism 57. The gearbox 51 is a mechanism to change deceleration ratios, such as a constant-mesh gearbox and a selective-sliding gearbox.

The gearbox 51 has on the main shaft 52 plural shift gears 53a (for example, first-speed gear, second-speed gear, third/fourth-speed gear) and shift gears 53b (for example, fifth-speed gear and six-speed gear). Also, the gearbox 51 has on the countershaft 55 plural shift gears 54a (for example, first-speed gear, second-speed gear, third/fourth-speed gear) and shift gears 54b (for example, fifth-speed gear and six-speed gear). The shift gears 53a are spline-connected to the main shaft 52 and operates in conjunction with the main shaft 52. The shift gears 54a are provided such that they run idle to the countershaft 55, and mesh with the shift gears 53a, respectively. The shift gears 53b are provided such that they run idle to the main shaft 52. The shift gears 54b mesh with the corresponding shift gears 53b respectively, while being spline-connected to the countershaft 55 to operate in conjunction with the countershaft 55.

The gearbox 51 is also provided with a gearshift mechanism 56. The gearshift mechanism 56 includes a shift fork and a shift drum, for example, and selectively moves the shift gears 53a, 53b, 54a, 54b in the axial direction of the main shaft 52 or the countershaft 55. Then, the gearshift mechanism 56 causes the shift gears 53b, 54a, which are provided to turn free to the corresponding shafts, to connect with the adjacent shift gears 53a, 54b, which operate in conjunction with the corresponding shafts. This changes the shift gears 53a, 54b, 54a, 54b to transmit torque from the main shaft 52 to the countershaft 55. The gearshift mechanism 56 is actuated by receiving power from a shift actuator 16 to be discussed later.

The transmission mechanism 57 is designed to decelerate the rotation of the countershaft 55 and transmit the decelerated rotation to the axle 3a of the rear wheel 3. In this example, the transmission mechanism 57 includes: a drive-side member 57a (for example, drive-side sprocket), which operates in conjunction with the countershaft 55; a driven-side member 57b (for example, driven-side sprocket), which operates in conjunction with the axle 3a; and a transmission member 57c (for example, chain), which transmits torque from the drive-side member 57a to the driven-side member 57b.

Torque outputted from the engine 30 is transmitted to the drive-side member 41 of the clutch 40 via the primary deceleration mechanism 36. The torque transmitted to the drive-side member 41 is transmitted to the axle 3a of the rear wheel 3 via the driven-side member 42, the gearbox 51, and the transmission mechanism 57, in the case that the clutch 40 is engaged or the drive-side member 41 and the driven-side member 42 contact each other, that is, the clutch 40 is in a half-clutch state.

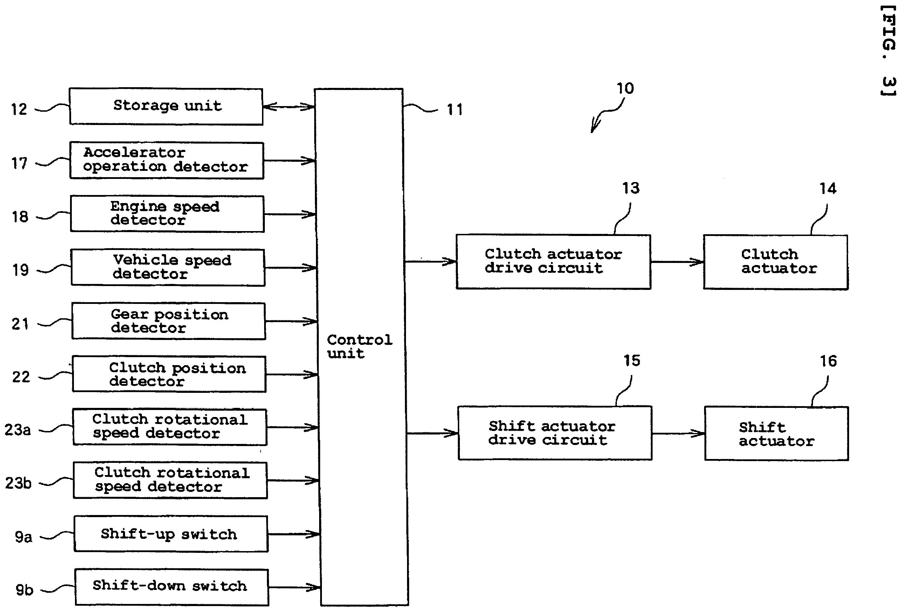

Now, a configuration of the clutch controller 10 is described. The motorcycle 1 is a semi-automatic vehicle which changes the shift gears of the gearbox 51 without the need for the rider to operate the clutch. The clutch controller 10 controls the degree of engagement of the clutch 40 (relative positions of the drive-side member 41 and the driven-side member 42), and changes the shift gears 53a, 53a, 54a, 54b. FIG. 3 is a block diagram illustrating a configuration of the clutch controller 10. As shown in FIG. 3, the clutch controller 10 is provided with a control unit 11, a storage unit 12, a clutch actuator drive circuit 13, a clutch actuator 14, a shift actuator drive circuit 15, a shift actuator 16, an accelerator operation detector 17, an engine speed detector 18, a vehicle speed detector 19, a gear position detector 21, a clutch position detector 22, and clutch rotational speed detectors 23a, 23b. The control unit 11 is connected to a shift-up switch 9a and a shift-down switch 9b.

The control unit 11 includes a central processing unit (CPU) and operates in accordance with programs stored in the storage unit 12. Specifically, the control unit 11 changes the shift gears 53a, 53a, 54a, 54b of the gearbox 51 according to the rider's gearshift operation (in this example, switching the shift-up switch 9a or the shift-down switch 9b ON), while controlling the degree of engagement of the clutch 40 during engaging operation thereof. The processing executed by the control unit 11 will be discussed in detail later.

The storage unit 12 includes a nonvolatile memory and a volatile memory. The storage unit 12 stores in advance programs executed by the control unit 11 and tables or expressions used for the processing in the control unit 11. These tables and expressions will be discussed in details later.

The clutch actuator drive circuit 13 supplies drive voltage or drive current the clutch actuator 14 in accordance with a control signal inputted from the control unit 11. The clutch actuator 14 includes, for example, a motor and a power transmission mechanism (such as hydraulic path and wire), and is driven by receiving the electric power supplied by the clutch actuator drive circuit 13. In this example, the clutch actuator 14 presses a push rod 43 or releases the pressed push rod 43. When the push rod 43 is pressed by the clutch actuator 14, it moves the drive-side member 41 and the driven-side member 42 away from each other against the elastic force of the clutch spring 44, so that the clutch 40 is disengaged. In contrast, when the pressed push rod 43 is released by the clutch actuator 14, it returns to its original position (the position at the time when the clutch 40 is engaged) using the elastic force of the clutch spring 44. Thus, the drive-side member 41 and the driven-side member 42 approach each other, so that the clutch 40 is engaged. In addition, the clutch actuator 14 puts the clutch 40 to be in a half-clutch state during engaging operation of the clutch 40. When the clutch 40 is in a half-clutch state, only part of torque of the engine 30 is transmitted from the drive-side member 41 to the driven-side member 42.

The shift actuator drive circuit 15 supplies drive voltage or drive current to the shift actuator 16 in accordance with a control signal inputted from the control unit 11. The shift actuator 16 includes, for example, a motor and a power transmission mechanism (such as hydraulic path and wire), and is driven by receiving the electric power supplied from the shift actuator drive circuit 15. The shift actuator 16 actuates the gearshift mechanism 56 to change the shift gears 53a, 53b, 54a, 54b to transmit torque from the main shaft 52 to the countershaft 55, in order to change the deceleration ratios.

The accelerator operation detector 17 is designed to detect an amount of the accelerator operation by the rider (hereinafter referred to as accelerator displacement). Examples of the accelerator operation detector 17 are a throttle position sensor for detecting a throttle opening and an accelerator position sensor mounted to the accelerator grip 5a to detect a rotation angle of the accelerator grip 5a. Based on the signal outputted from the accelerator operation detector 17, the control unit 11 detects the accelerator displacement by the rider.

The engine speed detector 18 is designed to detect a rotational speed of the engine 30 (hereinafter referred to as engine speed). Example of the engine speed detector 18 are a crank angle sensor for outputting a pulse signal with a frequency according to the rotational speed of the crankshaft 43 or the primary deceleration gears 36a, 36b and a tachogenerator for outputting a voltage signal according to the rotational speed thereof. The control unit 11 calculates the engine speed based on the signal inputted from the engine speed detector 18.

The vehicle speed detector 19 is designed to detect a vehicle speed and outputs a signal to the control unit 11 according to, for example, the rotational speed of the axle 3a of the rear wheel 3 or that of the countershaft 55. The control unit 11 calculates the vehicle speed based on the signal. The vehicle speed detector 19 may output a signal to the control unit 11 according to the rotational speed of the main shaft 52. In this case, the control unit 11 calculates the vehicle speed not only based on the input signal, but also based on the deceleration ratio of the gearbox 51 and that of the transmission mechanism 57.

The gear position detector 21 is designed to detect positions of the shift gears 53a, 53b, 54a, 54b provided movably in the axial direction of the countershaft 55 or the main shaft 52. An example of the gear position detector 21 is a potentiometer mounted to the gearshift mechanism 56 or the shift actuator 16. The gear position detector 21 outputs a signal to the control unit 11 according to the positions of the shift gears 53a, 53b, 54a, 54b. Based on the input signal, the control unit 11 detects that movements of the shift gears 53a, 53b, 54a, 54b, which are associated with the gear shifting, have been completed.

The clutch position detector 22 is designed to detect the degree of engagement of the clutch 40. Examples of the clutch position detector 22 are a potentiometer for outputting a signal according to the position of the push rod 43 and a potentiometer for outputting a signal according to the position or the rotation angle of the output shaft of the clutch actuator 14. Based on the signal inputted from the clutch position detector 22, the control unit 11 detects the degree of engagement of the clutch 40.

The clutch rotational speed detector 23a is designed to detect the rotational speed of the drive-side member 41 (hereinafter referred to as rotational speed of the drive-side member 41). Examples of the clutch rotational speed detector 23a are a rotary encoder for outputting a pulse signal with a frequency according to the rotational speed of the drive-side member 41 and a tachogenerator for outputting a voltage signal according to the rotational speed of the drive-side member 41. In turn, the clutch rotational speed detector 23b is designed to detect the rotational speed of the driven-side member 42 (hereinafter referred to as rotational speed of the driven-side member 42). Examples of the clutch rotational speed detector 23b are a rotary encoder and a tachogenerator, as described for the clutch rotational speed detector 23a.

The shift-up switch 9a and the shift-down switch 9b are designed for the rider to provide instructions to change the shift gears 53a, 53b, 54a, 54b to the clutch controller 11. These switches 9a, 9b output a signal to the control unit 11 according to the gear shift instructions. The control unit 11 actuates the shift actuator 16 according to the input signal to change the shift gears 53a, 53b, 54a, 54b to transmit torque from the main shaft 52 to the countershaft 55. The shift-up switch 9a and the shift-down switch 9b are provided adjacent to the accelerator grip 5a, for example.

Now, description is made of the processing executed by the control unit 11. The control unit 11 obtains torque Tac transmitted from the drive-side member 41 to the downstream mechanism (such as the driven-side member 42, or the countershaft 55 and the axle 3a located downstream of the driven-side member 42) in the torque transmission path including the driven-side member 42 (hereinafter the torque is referred to as actual transmission torque). In addition, the control unit 11 obtains torque Treq, which is requested by the rider, according to the accelerator displacement detected by the accelerator operation detector 17 (hereinafter the torque is referred to as request transmission torque). Further, the control unit 11 obtains torque Ttg which is supposed to be transmitted from the drive-side member 41 to the downstream mechanism (hereinafter the torque is referred target transmission torque). Then, in an operation range in which the torque outputted from the engine 30 decreases as the engine speed increases (hereinafter the operation range is referred to as torque-decreasing operation range), the control unit 11 sets the target transmission torque Ttg at the request transmission torque Treq, and actuates the clutch actuator 14 according a difference between the actual transmission torque Tac and the target transmission torque Ttg, such that Tac approximates Ttg (hereinafter this control is referred to as request follow-up control (first control)).

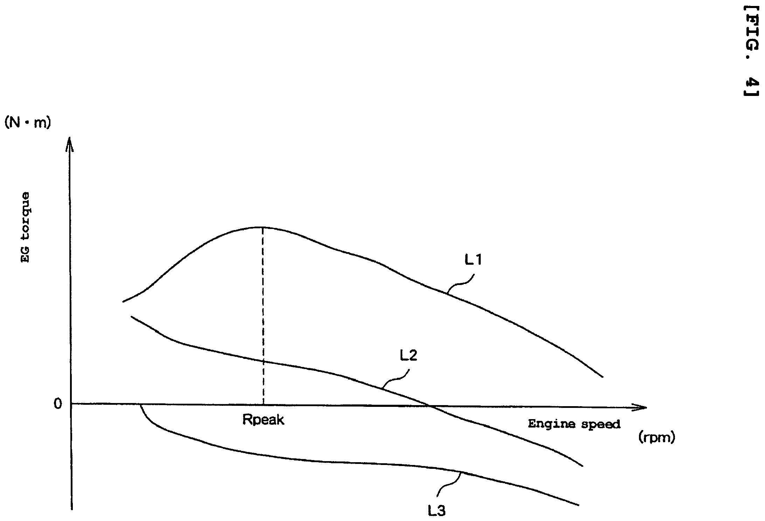

First, the operation range of the engine 30 is described. FIG. 4 is a graph illustrating the operation range of the engine 30. In FIG. 4, the horizontal axis represents engine speed, and the vertical axis represents torque TEac produced by the engine 30 (hereinafter referred to as EG torque). The graph illustrates torque curves L1 to L3 representing output characteristics of the engine 30. The torque curve L1 shows the relationship between the engine speed and the EG torque TEac, if the accelerator displacement is large or the accelerator grip 5a is operated greatly. In turn, the torque curve L3 shows the relationship between the engine speed and the EG torque TEac, if the accelerator displacement is small. The torque curve L2 shows the relationship between the engine speed and the EG torque TEac, if the accelerator displacement is moderate.

If the accelerator displacement is large, the torque curve L1 shows the maximum EG torque TEac at the engine speed of a value Rpeak. In the operation range in which the engine speed is lower than the value Rpeak, the EG torque TEac increases as the engine speed increases. In contrast, in the operation range in which the engine speed is higher than the value Rpeak, the EG torque TEac decreases as the engine speed increases. In turn, in the operation range in which the accelerator displacement is small and in the operation range in which the accelerator displacement is moderate, the torque curves L2 and L3 show at any engine speed that the engine torque TEac decreases as the engine speed increases.

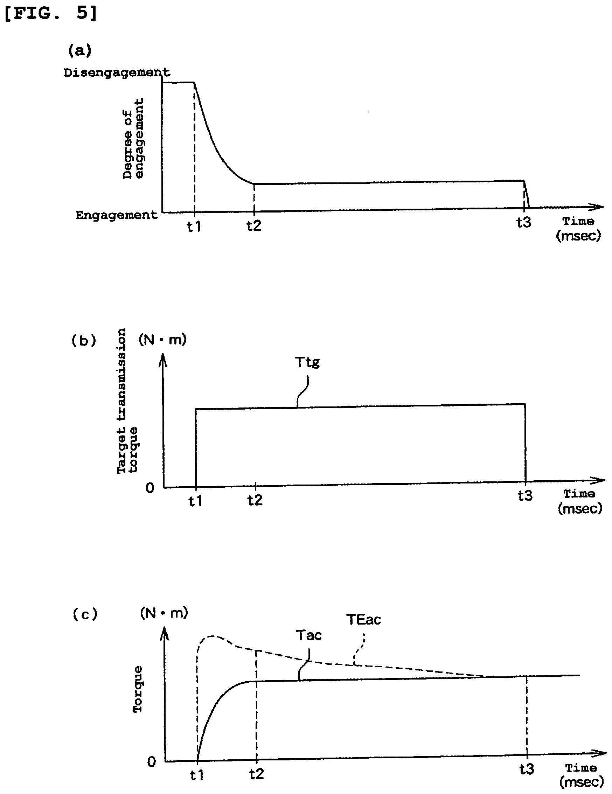

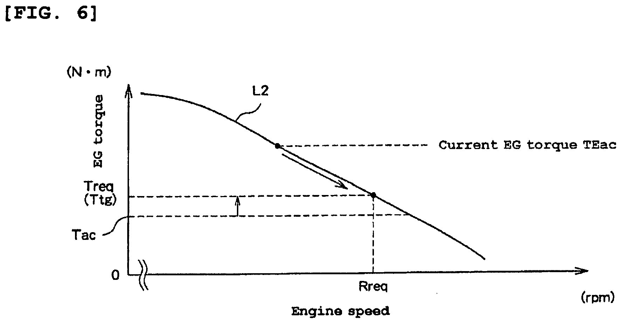

Now, overview of the request follow-up control is described. FIG. 5(a) to 5(c) illustrate the overview of the request follow-up control, and are time charts respectively showing examples of changes in degree of engagement of the clutch 40, target transmission torque Ttg, actual transmission torque Tac, and EG torque TEac in the case the request follow-up control is performed in the torque-decreasing operation range. FIG. 5(a) shows the degree of engagement of the clutch 40. FIG. 5(b) shows the target transmission torque Ttg. FIG. 5(c) shows the actual transmission torque Tac and the EG torque TEac. FIG. 6 illustrates changes in engine speed and EG torque TEac in the case when the request follow-up control is performed in the torque-decreasing operation range. In FIG. 6, the horizontal axis represents engine speed, and the vertical axis represents EG torque. In addition, a line L2 shown in FIG. 6 is a torque curve in the case of the aforementioned medium accelerator displacement. FIG. 6 shows the EG torque TEac obtained at the point in time immediately before the time t2 in FIG. 5, and so forth. Hereinafter, the EG torque TEac is described as a value obtained by multiplying the torque on the drive-side member 41 or the torque outputted from the engine 30 by the gear ratio of the primary deceleration mechanism 36 (the number of teeth of the driven-side primary deceleration gear 36b / the number of teeth of the drive-side primary deceleration gear 36a). In turn, the actual transmission torque Tac is described as torque transmitted to the driven-side member 42 in the mechanism downstream of the drive-side member 41.

At t1, when the rider operates the accelerator grip 5a and thus the start-up conditions, to be discussed later, are satisfied, the control unit 11 sets the target transmission torque Ttg as the request transmission torque Treq, which is determined according to the accelerator displacement by the rider, as shown in FIG. 5(b). As shown in FIG. 5(c), at this time when the accelerator grip 5a is operated, the EG torque TEac increases. After that, as shown in FIGs. 5(a) and 5(c), the control unit 11 actuates the clutch actuator 14 according to the difference between the target transmission torque Ttg and the actual transmission torque Tac in order to gradually enhance the degree of engagement of the clutch 40. Thereby, the control unit 11 allows the actual transmission torque Tac to approximate the target transmission torque Ttg (the request transmission torque Treq under this control). Then, at t2, the actual transmission torque Tac reaches the target transmission torque Ttg. After that, because the difference between the actual transmission torque Tac and the target transmission torque Ttg is almost eliminated, the control unit 11 keeps the degree of engagement of the clutch 40 approximately constant. After that, at t3, when the difference between the rotational speed of the drive-side member 41 and the rotational speed of the driven-side member 42 (hereinafter referred to as clutch rotational speed difference) falls below a predetermined value (hereinafter referred to as rotational speed difference for discontinuing half-clutch (for example, a value 0 or a value close to 0)), the control unit 11 allows the clutch 40 to be completely engaged.

As shown in FIG. 5(c), generally there is a difference between the EG torque TEac and the actual transmission torque Tac when the clutch 40 is in a half-clutch state. If the EG torque TEac is higher than the actual transmission torque Tac, the difference therebetween contributes to an increase in engine speed; therefore, the engine speed increases at a rate according to the difference. Thus, as shown in FIG. 5(c), when the EG torque TEac increases at t1 and becomes higher than the actual transmission torque Tac, the engine speed increases. Then, as shown in FIG. 6 and FIG. 5(c), the EG torque TEac outputted from the engine 30 decreases as the engine speed increases. Then, as shown in FIG. 5(c), at t3, the EG torque TEac corresponds with the actual transmission torque Tac that has already reached the target transmission torque Ttg. In other words, the EG torque TEac, the actual transmission torque Tac, and the request transmission torque Treq correspond with each other. Up to this point, the discussion has been made with its focus on the overview of the request follow-up control and the changes in degree of engagement of the clutch 40 and so forth with respect to time in the case when the request follow-up control is performed.

If the EG torque TEac is lower than the actual transmission torque Tac, torque produced by the inertia of the internal mechanism of the engine 30 such as the crankshaft 34 (hereinafter referred to as inertia torque Tlac) is transmitted as part of the actual transmission torque Tac via the clutch 40. Therefore, the engine speed decreases. Thus, under this control, when the EG torque TEac falls below the actual transmission torque Tac, the engine speed switches from increasing to decreasing, and the EG torque TEac thus starts increasing, thereby approaching the actual transmission torque Tac. Consequently, in this operation range, when the control is performed such that the actual transmission torque Tac approximates the target transmission torque Ttg, which is set at the request transmission torque Treq, the engine speed converges to an engine speed Rreq at which torque equal to the request transmission torque Treq is outputted as the EG torque TEac (hereinafter the engine speed is referred to as request torque rotational speed) (see FIG. 6).

However, as under the request follow-up control described above, the target transmission torque Ttg is set on the request transmission torque Treq, and the clutch actuator 14 is actuated according to the difference between the target transmission torque Ttg and the actual transmission torque Tac, such control, depending on the operation range of the engine 30, can cause the engine speed to continue to increase or decrease without converging to a constant value or can require a long time period for the engine speed to converge to a constant value. For example, the engine speed continues to increase or decrease in the operation range in which the EG torque TEac increases, following the increase in the engine speed (in the example of FIG. 4, this operation range is shown in a part of the torque curve L1 where the engine speed is lower than the value Rpeak, and is hereinafter referred to as torque-increasing operation range). The reasons for this event are described below.

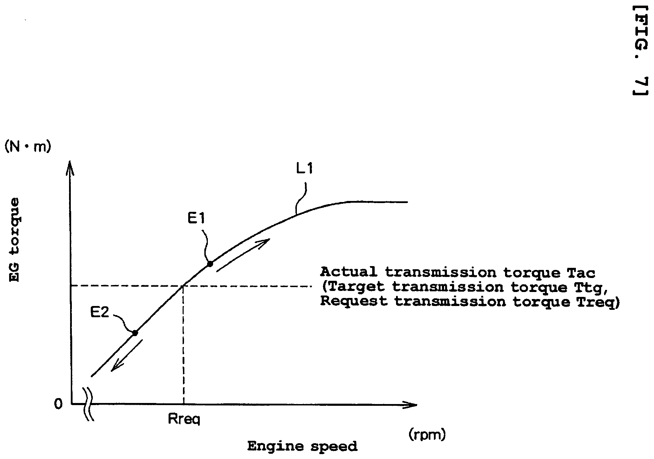

FIG. 7 illustrates changes in engine speed in the case when the aforementioned control is performed in the torque-increasing operation range. In FIG. 7, the horizontal axis represents engine speed, and the vertical axis represents EG torque TEac. The L1 in FIG. 7 is a part of the torque curve L1 shown in FIG. 4, where the engine speed is lower than Rpeak. Also, in FIG. 7, the point E1 represents the EG torque TEac that is higher than the actual transmission torque Tac, and the point E2 represents the EG torque TEac that is lower than the actual transmission torque Tac.

As described above, if the EG torque TEac is higher than the actual transmission torque Tac, the engine speed increases. Thus, in this case, as shown the point E1 in FIG. 7, the EG torque TEac further deviates from the actual transmission torque Tac as the engine speed increases so that the engine speed continues to increase. Also as described above, if the EG torque TEac is lower than the actual transmission torque Tac, the engine speed decreases. Thus, in this case, as shown the point E2 in FIG. 7, the EG torque TEac further deviates from the actual transmission torque Tac as the engine speed decreases so that the engine speed continues to decrease. Thus, in the case where the clutch 40 is controlled such that the actual transmission torque Tac approximates the request transmission torque Treq in the torque-increasing operation range, the engine speed could become excessively high or low without converging to the request torque rotational speed Rreq in this operation range, even if the actual transmission torque Tac has reached the request transmission torque Treq.

Therefore, in the torque-increasing operation range, the control unit 11 performs to prevent the engine speed from excessively increasing or decreasing, instead of the request follow-up control. Specifically, if the EG torque TEac is higher than the request transmission torque Treq, the control unit 11 actuates the clutch actuator 14 such that the actual transmission torque Tac approximates the EG torque TEac (hereinafter this control is referred to as rotational speed maintaining control (the second control)). For example, under the rotational speed maintaining control, the control unit 11 sets the target transmission torque Ttg at the EG torque TEac and actuates the clutch actuator 14 according to the difference between the target transmission torque Ttg and the actual transmission torque Tac, such that Tac approximates Ttg.

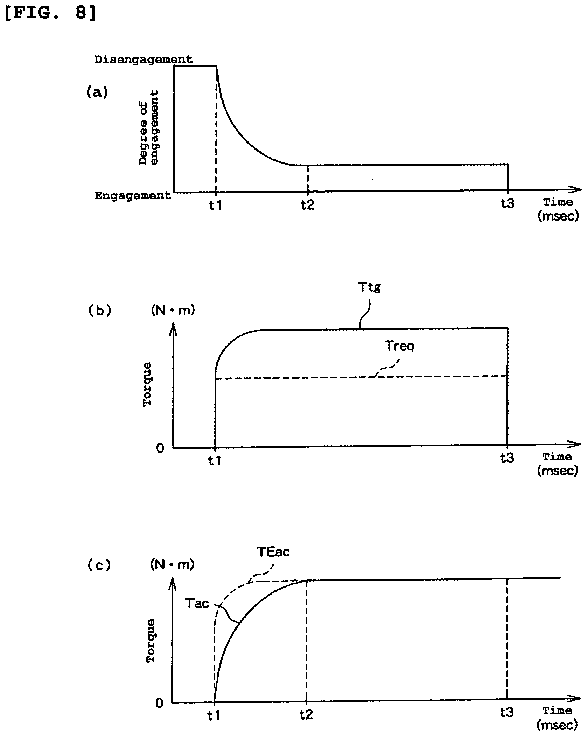

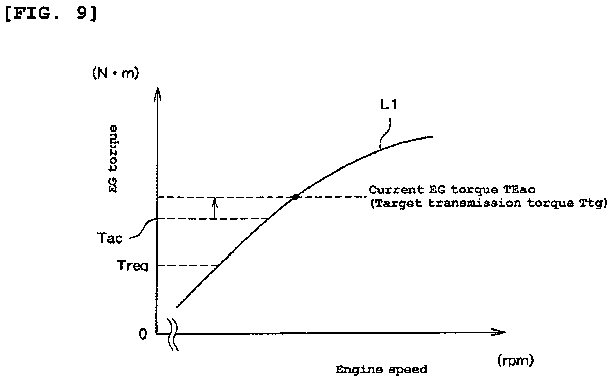

FIGs. 8(a) to 8(c) are time charts respectively showing examples of changes in degree of engagement of the clutch 40, target transmission torque Ttg, actual transmission torque Tac, and of EG torque TEac when the rotational speed maintaining control is performed. FIG. 8(a) shows the degree of engagement of the clutch 40. FIG. 8(b) shows the target transmission torque Ttg. FIG. 8(c) shows the actual transmission torque Tac and the EG torque TEac. In FIG. 8(b), the request transmission torque Treq is shown by a broken line. FIG. 9 illustrates changes in engine speed and EG torque TEac when the rotational speed maintaining control is performed. In FIG. 9, the horizontal axis represents engine speed, and the vertical axis represents EG torque. The L1 in FIG. 9 is a part of the torque curve L1 shown in FIG. 4, where the engine speed is lower than Rpeak. FIG. 9 shows the EG torque TEac at the point immediately before t2 in FIG. 8, and so forth.

At t1, when the rider operates the accelerator grip 5a, and thus, the vehicle start-up conditions are satisfied, the EG torque TEac increases as shown in FIG. 8(c). Then, if the EG torque TEac exceeds the request transmission torque Treq determined according to the accelerator displacement, the control unit 11 sets the target transmission torque Ttg not at the request transmission torque Treq but at the EG torque TEac, as shown in FIG. 8(b). After that, as shown in FIGs. 8(a) and 8(c), the control unit 11 actuates the clutch actuator 14 according to the difference between the target transmission torque Ttg (EG torque TEac in this example) and the actual transmission torque Tac in order to gradually enhance the degree of engagement of the clutch 40. Thereby, the control unit 11 allows the actual transmission torque Tac to approximate the EG torque TEac. Consequently, as shown in FIG. 8(c), the actual transmission torque Tac reaches the EG torque TEac at t2. After that, at t3, when the clutch rotational speed difference falls below the rotational speed difference for discontinuing half-clutch, the control unit 11 allows the clutch 40 to be completely engaged.

In addition, as shown in FIG. 8(c), the EG torque TEac increases at t1 and is thus higher than the actual transmission torque Tac. Therefore, the engine speed keeps increasing from t1 onwards. Then, as shown in FIG. 9 and FIG. 8(c), in the torque-increasing operation range, the EG torque TEac increases as the engine speed increases. However, control by the control unit 11 allows the difference between the actual transmission torque Tac and the EG torque TEac to be eliminated at the point (t2) where the actual transmission torque Tac reaches the target transmission torque Ttg, and thus, the engine speed stops increasing. Up to this point, the discussion has focused on the overview of the rotational speed maintaining control.

Now, description is made of the control to be performed if the engine 30 operates in the torque-increasing operation range, and if the EG torque TEac is lower than the request transmission torque Treq. In this case, the control unit 11 actuates the clutch actuator 14 such that the engine speed increases to a predetermined engine speed (hereinafter this control is referred to as rotational speed induction control). Specifically, the control unit 11 actuates the clutch actuator 14 such that the engine speed increases or decreases to an engine speed determined according to the request transmission torque Treq. For example, the control unit 11 sets the target transmission torque Ttg such that either one of the target transmission torque Ttg and the request transmission torque Treq is higher than the EG torque TEac while the other is lower than the EG torque TEac. More specifically, if the EG torque TEac is lower than the request transmission torque Treq, the control unit 11 sets the target transmission torque Ttg at a value lower than the EG torque TEac. In addition, the control unit 11 allows the target transmission torque Ttg to gradually approximate the request transmission torque Treq during engaging operation of the clutch 40.

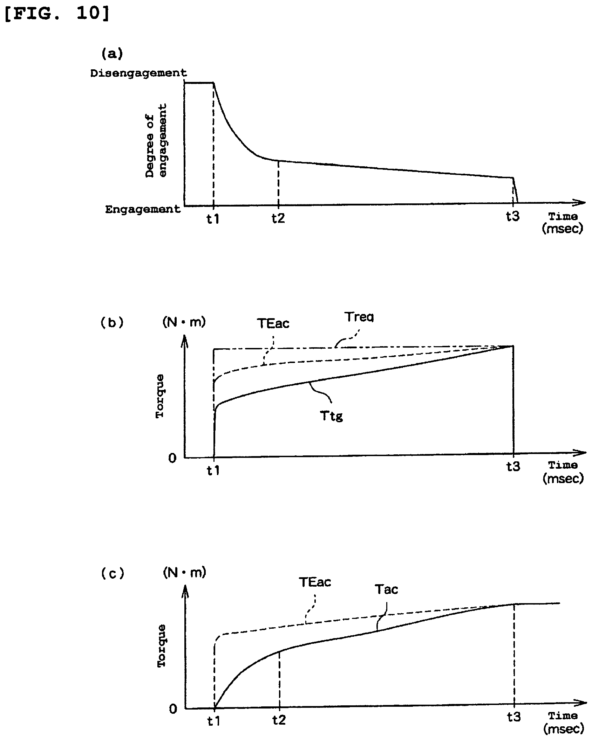

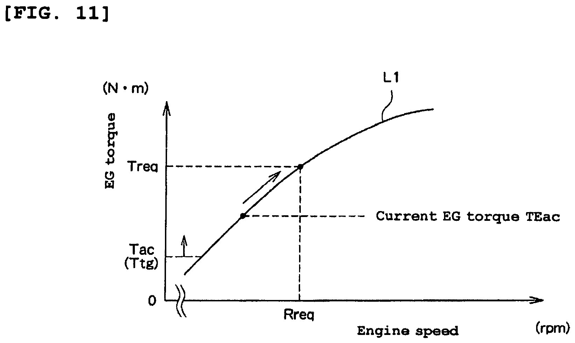

FIGs. 10(a) to 10(c) are time charts respectively showing examples of changes in degree of engagement of the clutch 40, target transmission torque Ttg, request transmission torque Treq, EG torque TEac, and actual transmission torque Tac in the case when the rotational speed induction control is performed. FIG. 10(a) shows the degree of engagement of the clutch 40. FIG. 10(b) shows the target transmission torque Ttg, the request transmission torque Treq and the EG torque TEac. FIG. 10(c) shows the actual transmission torque Tac and the EG torque TEac. FIG. 11 is a graph illustrating changes in engine speed and EG torque in the case when the rotational speed induction control is performed. In FIG. 11, the horizontal axis represents engine speed, and the vertical axis represents EG torque. The L1 in FIG. 11 is a part of the torque curve L1 shown in FIG. 4, where the engine speed is lower than Rpeak. In addition, FIG. 11 shows the EG torque TEac and so forth from t2 onwards in FIGs. 10(a) to 10(c).

At t1, when the rider operates the accelerator grip 5a and thus the vehicle start-up conditions are satisfied, the EG torque TEac increases as shown in FIG. 10(c). Then, as shown in FIG. 10(b), unless the EG torque TEac exceeds the request transmission torque Treq determined according to the accelerator displacement, the control unit 11 performs the rotational speed induction control. Specifically, the control unit 11 sets the target transmission torque Ttg at a value lower than the EG torque TEac. Then, the control unit 11 actuates the clutch actuator 14 according to the difference between the target transmission torque Ttg and the actual transmission torque Tac. Thereby, as shown in FIGs. 10(a) and 10(c), the control unit 11 enhances the degree of engagement of the clutch 40 gradually in order to allow the actual transmission torque Tac to approximate the target transmission torque Ttg. Then, at t2, the actual transmission torque Tac reaches the target transmission torque Ttg.

In addition, as shown in FIG. 10(c), the EG torque TEac increases at the time t1 and becomes higher than the actual transmission torque Tac, and thus, the engine speed increases. Then, as shown in FIG. 11 and FIG. 10(c), in the torque-increasing operation range, the EG torque TEac increases as the engine speed increases. Under this control, the control unit 11 sets the target transmission torque Ttg at a value lower than the EG torque TEac, while gradually increasing the target transmission torque Ttg to the request transmission torque Treq. Thus, from t2 onwards, the actual transmission torque Tac follows the target transmission torque Ttg, approximating the request transmission torque Treq. Consequently, as shown in FIG. 10(b), at t3, the request transmission torque Treq, the target transmission torque Ttg, and the EG torque TEac are equal to each other, and thus the difference is eliminated between the actual transmission torque Tac and the EG torque TEac. Thereby, the engine speed converges to an engine speed that is determined according to the request transmission torque Treq (in this example, engine speed Rreq at which the EG torque TEac equals to the request transmission torque is outputted). Up to this point, the discussion has focused on the overview of the rotational speed induction control.

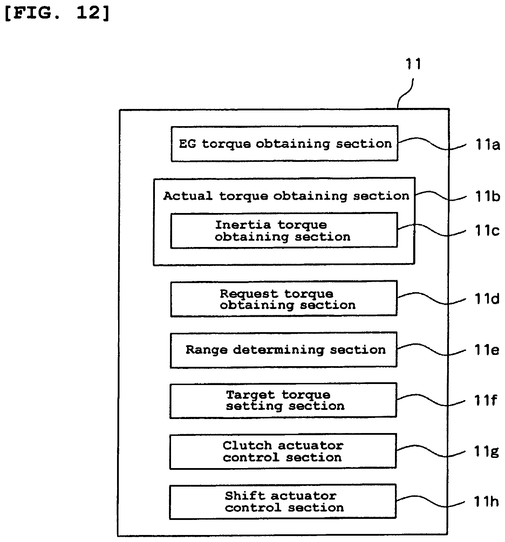

The processing executed by the control unit 11 is discussed in detail. FIG. 12 is a block diagram illustrating the processing functions of the control unit 11. As shown in FIG. 12, the control unit 11 includes an EG torque obtaining section 11a, an actual torque obtaining section 11b, a request torque obtaining section 11d, a range determining section 11e, a target torque setting section 11f, a clutch actuator control section 11g, and a shift actuator control section 11h. The actual torque obtaining section 11b includes an inertia torque obtaining section 11c.

Description is first made of the processing executed by the EG torque obtaining section 11a. The EG torque obtaining section 11a executes the processing for obtaining the EG torque TEac currently outputted from the engine 30. For example, the storage unit 12 stores in advance a table that establishes the correspondence between the EG torque TEac, and the engine speed and the accelerator displacement (hereinafter the table is referred to as EG torque table). Then, the EG torque obtaining section 11a detects the accelerator displacement based on the signal inputted from the accelerator operation detector 17, while detecting the engine speed based on the signal inputted from the engine speed detector 18. Then, the EG torque obtaining section 11a refers to the EG torque table to obtain the EG torque TEac that corresponds to the detected accelerator displacement and engine speed. As mentioned above, the EG torque TEac is defined herein as a value obtained by multiplying the torque outputted from the engine 30 by the gear ratio of the primary deceleration mechanism 36.

In place of the EG torque table, the storage unit 12 may store in advance an expression that represents the relationship between the engine speed, the accelerator displacement and the EG torque TEac (hereinafter the expression is referred to as EG torque relational expression). In this case, the EG torque obtaining section 11a substitutes the detected engine speed and accelerator displacement into the EG torque relational expression in order to calculate the current EG torque TEac.

Alternatively, the EG torque obtaining section 11a may obtain the EG torque TEac based on pressure of air flowing through the interior of the intake pipe 35 (hereinafter the pressure is referred to as intake pressure). For example, the storage unit 12 may store in advance a table that establishes the correspondence between the EG torque TEac, and the intake pressure and the engine speed. In addition, a pressure sensor for outputting a signal according to the intake pressure is disposed in the intake pipe 35. In this case, the EG torque obtaining section 11a detects the engine speed at the time when the crank angle is a predetermined value (for example, at the end of intake stroke), while detecting the intake pressure based on the signal inputted from the pressure sensor. Then, the EG torque obtaining section 11a refers to the table stored in the storage unit 12 to obtain the EG torque TEac that corresponds to the detected intake pressure and engine speed.

Now, description is made of the processing executed by the actual torque obtaining section 11b. The actual torque obtaining section 11b executes the processing for obtaining the actual transmission torque Tac in a predetermined cycle (for example, several milliseconds) during engaging operation of the clutch 40. Specifically, the actual torque obtaining section 11b calculates the actual transmission torque Tac based on the EG torque TEac obtained by the EG torque obtaining section 11a and based on the torque produced due to the inertia of the mechanism (such as the crankshaft 34, the piston 32 and the primary deceleration mechanism 36) located upstream of the drive-side member 41 in the torque transmission path (i.e. inertia torque Tlac).

Description is first made of the processing for obtaining the inertia torque Tlac. The inertia torque Tlac is a value determined according to the variation in engine speed $\Omega e$ per unit time ($d\Omega e / dt$, hereinafter referred to as rate-of-change of EG speed). The storage unit 12 stores in advance an expression that associates the inertia torque Tlac with the rate-of-change of EG speed ($d\Omega e / dt$). Specifically, the storage unit 12 stores in advance an expression, in which the inertia torque Tia is equal to a value ($I \times (d\Omega e / dt)$) obtained by multiplying the inertial moment I on the mechanism upstream of the drive-side member 41 by the rate-of-change of EG speed ($d\Omega e / dt$). In this case, the inertia torque obtaining section 11c, included in the actual torque obtaining section 11b, calculates the rate-of-change of EG speed ($d\Omega e / dt$) based on the signal inputted from the engine speed detector 18. Then, the inertia torque obtaining section 11c multiplies the rate-of-change of EG speed ($d\Omega e / dt$) by the inertial moment I, and defines the multiplication result ($I \times (d\Omega e / dt)$) as inertia torque Tlac. The storage unit 12 may store in advance a table that establishes the correspondence between the rate-of-change of EG speed ($d\Omega e / dt$) and the inertia torque Tlac. In this case, the inertia torque obtaining section 11c refers to the table to obtain the inertia torque Tlac that corresponds to the rate-of-change of EG speed ($d\Omega e / dt$).

The actual torque obtaining section 11a assigns the EG torque TEac and the inertia torque Tlac, which are obtained from the aforementioned processing, to the expression that is stored in the storage unit 12 in advance and represents the relationship between the EG torque TEac, the inertia torque Tlac and the actual transmission torque Tac in order to calculate the actual transmission torque Tac. For example, the actual torque obtaining section 11b assigns the inertia torque Tlac and the EG torque TEac to the following expression (1), and defines the obtained value as actual transmission torque Tac.

$$Tac = TEac - Tiac \cdots\cdots(1)$$

The actual transmission torque Tac is described herein as torque transmitted to the driven-side member 42. However, for example, the actual torque obtaining section 11b may calculate torque transmitted to the countershaft 55 or the mechanism downstream of the countershaft 55 as actual transmission torque Tac. In this case, the actual torque obtaining section 11b obtains torque by multiplying the value, which is obtained from the aforementioned expression (1), by the deceleration ratio of the gearbox 51 (the gear ratio of the shift gears after shifted-up or shifted-down operation (after the clutch 40 is completely engaged)) and by the deceleration ratio of the transmission mechanism 57, and defines the obtained torque as actual transmission torque Tac.

In addition, when the torque produced on the mechanism upstream of the primary deceleration mechanism 36 is stored as EG torque TEac in the aforementioned EG torque table, the actual torque obtaining section 11b multiplies the EG torque TEac, which is obtained from the aforementioned processing, by the deceleration ratio of the primary deceleration mechanism 36 (the number of teeth of the driven-side primary deceleration gear 36b / the number of teeth of the drive-side primary deceleration gear 36a) in order to calculate the actual transmission torque Tac.

The processing for calculating the actual transmission torque Tac is not limited to the aforementioned processes. For example, the storage unit 12 may store in advance a table or an expression that establishes the correspondence between the actual transmission torque Tac, and the engine speed, the accelerator displacement and the rate-of-change of EG speed. In this case, the actual torque obtaining section 11b uses the table or the expression to directly obtain the actual transmission torque Tac from the engine speed, the rate-of-change of EG speed and the accelerator displacement.

Now, description is made of the processing executed by the request torque obtaining section 11d. The request torque obtaining section 11d executes the processing for obtaining the request transmission torque Treq based on the accelerator displacement detected by the accelerator operation detector 17. For example, the storage unit 12 stores in advance a table that establishes the correspondence between the accelerator displacement by the rider and the request transmission torque Treq (hereinafter the table is referred to as request torque table). Then, the request torque obtaining section 11d refers to the request torque table to obtain the request transmission torque Treq that corresponds to the accelerator displacement detected by the accelerator operation detector 17. Alternatively, the storage unit 12 may store an expression that represents the relationship between the accelerator displacement and the request transmission torque Treq. In this case, the request torque obtaining section 11d assigns the accelerator displacement detected by the accelerator operation detector 17 to the expression in order to calculate the request transmission torque Treq.

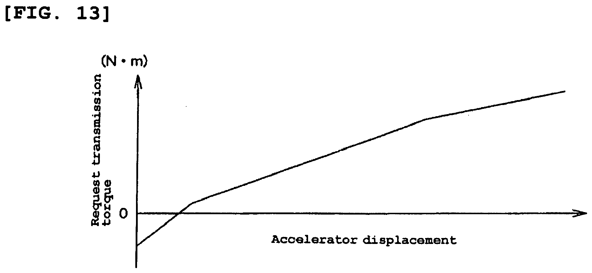

FIG. 13 is a graph that indicates an example of the relationship between the request transmission torque Treq and the accelerator displacement. On the graph, the horizontal axis represents accelerator displacement, and the vertical axis represents request transmission torque Treq. As shown in FIG. 13, as the accelerator displacement becomes larger, the request transmission torque Treq increases. In addition, in the example shown in FIG. 13, when the accelerator displacement is 0, the request transmission torque Treq is a negative value.

Now, description is made of the processing executed by the range determining section 11e. The range determining section 11e determines whether or not the engine 30 operates in the torque-decreasing operation range or in the torque-increasing operation range. The range determining section 11e executes this processing as below, for example.

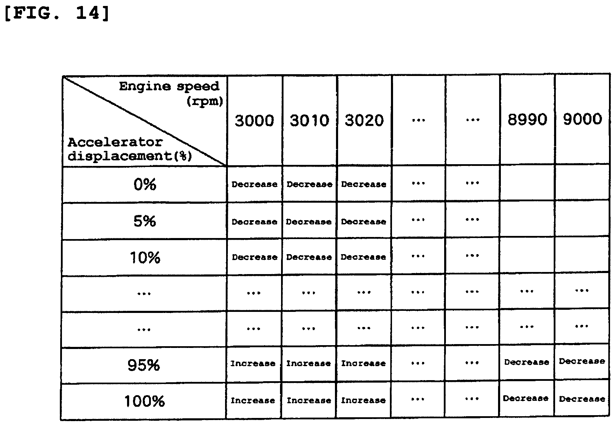

The storage unit 12 stores in advance an operation range information correspondence table showing that each operation range, which is specified by the accelerator displacement and the engine speed, is either the torque-increasing operation range or the information indicative of the torque-decreasing operation range (hereinafter the table is referred to as range determining table). FIG. 14 shows an example of the range determining table. The range determining table stores the engine speed on the top row and the accelerator displacement on the leftmost column, both of which specify the operation range. In addition, the range determining table stores, for each operation range specified by the accelerator displacement and the engine speed, the information indicating that the operation range is either the torque-increasing operation range or the torque-decreasing operation range. In FIG. 14, for example, in the operation range with 3000rpm engine speed and 100% accelerator displacement, the information indicating that this operation range is the torque-increasing operation range ("increase" in FIG. 14) is stored. In turn, in the operation range with 9000rpm engine speed and 5% accelerator displacement, the information indicating that this operation range is the torque-decreasing operation range ("decrease" in FIG. 14) is stored. In the case where the storage unit 12 stores such a range determining table, the range determining section 11e refers to the range determining table to determine whether the operation range that corresponds to the accelerator displacement and the engine speed detected by the respective detectors is the torque-increasing operation range or the torque-decreasing operation range.

Alternatively, before or during the engaging operation of the clutch 40, the range determining section 11e may estimate whether or not the EG torque TEac approximates the request transmission torque Treq in the case where the aforementioned request follow-up control is performed, and determine the current operation range based on the estimation result. Specifically, if the EG torque TEac is estimated to approximate the request transmission torque Treq, the range determining section 11e determines that the current operation range is the torque-decreasing operation range. In contrast, if the EG torque TEac is estimated to deviate from the request transmission torque Treq, the range determining section 11e determines that the current operation range is the torque-increasing operation range. This processing is executed as follows, for example.

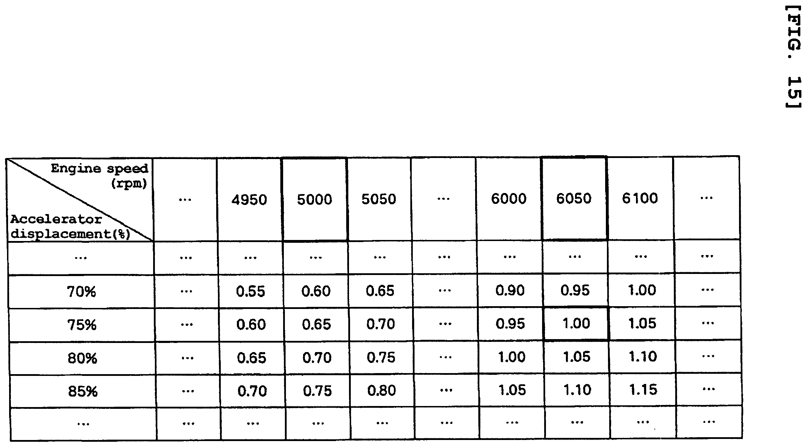

The range determining section 11e refers to the EG torque table to obtain the engine speed, at which the torque that equals to the request transmission torque is outputted as the EG torque TEac, that is, the request torque rotational speed Rreq. FIG. 15 shows an example of the EG torque table. In this table, the engine speed is listed on the top row and the accelerator displacement is listed in the leftmost column. The table also establishes the correspondence between each engine speed and accelerator displacement, and the EG torque TEac. In the case where the storage unit 12 stores such an EG torque table and for example, the accelerator displacement is 75% and the request transmission torque Treq is 1.00, the range determining section 11e refers to this EG Torque table and obtains the request torque rotational speed Rreq of 6050rpm.

In addition, the range determining section 11e estimates the tendency of changes in the engine speed when the request follow-up control is performed. Specifically, if the request transmission torque Treq is higher than the EG torque TEac, the actual transmission torque Tac made higher than the EG torque TEac accordingly by the request follow-up control. Therefore, the range determining section 11e estimates that the engine speed decreases. In contrast, if the request transmission torque Treq is lower than the EG torque TEac, the range determining section 11e estimates that the engine speed increases under the request follow-up control.

Then, if the current engine speed increases or decreases as estimated, the range determining section 11e determines whether or not the current engine speed approximates the request torque rotational speed Rreq. For example, if the current engine speed is 5000rpm and is estimated to increase, this engine speed approximates the request torque rotational speed Rreq (6050rpm in the aforementioned example) (see FIG. 15). In this case, because the EG torque TEac also approximates the request transmission torque Treq (1.00 in the aforementioned example) accordingly, the range determining section 11e determines that the engine 30 currently operates in the torque-decreasing operation range. In contrast, if the engine speed is estimated to decrease, the engine speed deviates from the request torque rotational speed Rreq (6050rpm in the aforementioned example), and accordingly, the EG torque TEac deviates from the request transmission torque Treq (see FIG. 15). In this case, the range determining section 11e determines that the engine 30 operates in the torque-increasing operation range.

Now, description is made of the target torque setting section 11f. The target torque setting section 11f sets the target transmission torque according to the determination result made by the range determination section 11e.

Specifically, if the engine 30 operates in the torque-decreasing operation range, the target transmission torque 11f regards the request transmission torque Treq obtained by the processing of the request torque obtaining section 11d as the target transmission torque Ttg.

In turn, if the engine 30 operates in the torque-increasing operation range, the target torque setting section 11f sets the target transmission torque Ttg depending on a positive or negative value of the difference between the EG torque TEac and the request transmission torque Treq. Specifically, if the EG torque TEac is higher than the request transmission torque Treq, the target torque setting section 11f sets the target transmission torque Ttg as the EG torque TEac.

In contrast, if the EG torque TEac is lower than the request transmission torque Treq, the target torque setting section 11f sets a value lower than the EG torque Teac as the target transmission torque Ttg. In addition, the target torque setting section 11f gradually reduces the difference between the target transmission torque Ttg and the request transmission torque Treq during engaging operation of the clutch 40. Specifically, the target torque setting section 11f determines the difference between the target transmission torque Ttg and the EG torque TEac according to that between the EG torque TEac and the request transmission torque Treq. For example, the target torque setting section 11f calculates the target transmission torque Ttg by assigning the EG torque TEac, which is obtained by the processing of the EG torque obtaining section 11a, and the request transmission torque Treq, which is obtained by the processing of the request torque obtaining section 11d, to the following expression (2) stored in the storage unit 12 in advance.

$$g = TEac - (Treq - TEac) \cdots (2)$$

When the target transmission torque Ttg is set in this manner, the target transmission torque Ttg approximates the request transmission torque Treq gradually during engaging operation of the clutch 40. In other words, as described by referring to FIGs. 10(a) to 10(c) and 11, the actual transmission torque Tac reaches the target transmission torque Ttg during engaging operation of the clutch 40. Therefore, when the target transmission torque Ttg is lower than the EG torque TEac, the actual transmission torque Tac also turns out to be lower than the EG torque TEac. Thus, the engine speed increases. In the torque-increasing operation range, the EG torque TEac increases as the engine speed increases. Thus, the difference between the EG torque TEac and the request transmission torque Treq is gradually reduced during engaging operation of the clutch 40; therefore, the target transmission torque Ttg also gradually approximates the request transmission torque Treq.

The processing executed by the target torque setting section 11f is not limited to this. For example, a maximum value ΔTmax of the difference between the EG torque TEac and the target transmission torque Ttg may be given. Thus, if the difference between the request transmission torque Treq and the EG torque TEac exceeds the maximum value ΔTmax, the target torque setting section 11f does not necessarily set the target transmission torque Ttg by assigning the EG torque TEac and the request transmission torque Treq to the expression (2). Alternatively, the target torque setting section 11f may set a value obtained by subtracting the maximum value ΔTmax from the EG torque TEac (TEac - ΔTmax) as the target transmission torque Ttg.

Now, description is made of the processing executed by the clutch actuator control section 11g. During engaging operation of the clutch 40, the clutch actuator control section 11g actuates the clutch actuator 14 in a predetermined cycle based on the difference between the actual transmission torque Tac and the target transmission torque Ttg (hereinafter referred to as torque deviation). Specifically, the clutch actuator control section 11g actuates the clutch actuator 14 by an amount according to the torque deviation to allow the actual transmission torque Tac to approximate the target transmission torque Ttg. The clutch actuator control section 11g executes the following processing, for example.

The storage unit 12 stores in advance an expression that represents the relationship between the torque deviation (Ttg - Tac) and the amount by which the clutch actuator 14 is actuated (hereinafter the amount is referred to as command actuation amount) (hereinafter the expression is referred to as actuation amount relational expression). The clutch actuator control section 11g calculates the torque deviation (Ttg - Tac) in a predetermined cycle during engaging operation of the clutch 40. Then, the clutch actuator control section 11g substitutes the torque deviation (Ttg - Tac) into the actuation amount relational expression in order to calculate the command actuation amount, and outputs a control signal to the clutch actuator drive circuit 13 according to the calculated command actuation amount. The clutch actuator drive circuit 13 outputs electric power to drive the clutch actuator 14 according to the control signal.

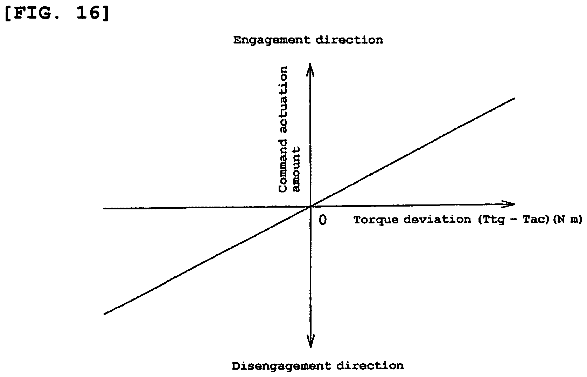

FIG. 16 is a graph showing the relationship between the torque deviation (Ttg - Tac) and the command actuation amount obtained from the actuation amount relational expression. In an example shown in FIG. 16, the actuation amount relational expression is established such that if the torque deviation (Ttg - Tac) is positive, the clutch actuator 14 is actuated in the direction to engage the clutch 40. In turn, the actuation amount relational expression is established such that if the torque deviation (Ttg - Tac) is negative, the clutch actuator 14 is actuated in the direction to disengage the clutch 40. In addition, the actuation amount relational expression is established such that the command actuation amount increases in proportion to the torque deviation (Ttg - Tac).

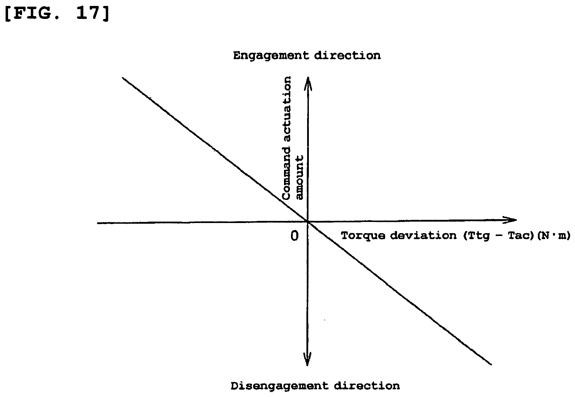

The storage unit 12 stores the actuation amount relational expressions; the one expression is to actuate the clutch actuator 14 in the direction to engage the clutch 40 when the torque deviation (Ttg - Tac) is positive as shown in FIG. 16 (hereinafter the expression is referred to as engagement actuation amount relational expression) and the other expression is to actuate the clutch actuator 14 in the opposite direction from or the direction to disengage the clutch 40 (hereinafter the expression is referred to as disengagement actuation amount relational expression). FIG. 17 is a graph showing the relationship between the torque deviation (Ttg - Tac) and the command actuation amount obtained from the disengagement actuation amount relational expression. In the graph shown in FIG. 17, the actuation amount relational expression is established such that if the torque deviation (Ttg - Tac) is positive, the clutch actuator 14 is actuated in the direction to disengage the clutch 40, in contrast to the graph shown in FIG. 16.

The clutch actuator control section 11g selects either the engagement actuation amount relational expression or the disengagement actuation amount relational expression depending on a positive or negative value of the difference in clutch rotational speed (rotational speed of the drive-side member 41 - rotational speed of the driven-side member 42). Specifically, if the difference in clutch rotational speed is positive, the clutch actuator control section 11g assigns the torque deviation (Ttg - Tac) to the engagement actuation amount relational expression. In contrast, if the difference in clutch rotational speed is negative, the clutch actuator control section 11g assigns the torque deviation (Ttg - Tac) to the disengagement actuation amount relational expression.

Alternatively, in place of the engagement actuation amount relational expression and the disengagement actuation amount relational expression, the storage unit 12 may store a table that establishes the correspondence between the command actuation amount, and the target transmission torque Ttg and the actual transmission torque Tac. In this case, the clutch actuator control section 11g refers to the table to directly obtain the command actuation amount that corresponds to the target transmission torque Ttg and the actual transmission torque Tac, rather than calculating the difference between the target transmission torque Ttg and the actual transmission torque Tac.

When the difference in clutch rotational speed is below the rotational speed difference for discontinuing half-clutch as a result of the aforementioned control based on the torque deviation, the clutch actuator control section 11g further actuates the clutch actuator 14 to completely engage the clutch 40.

Now, description is made of the processing executed by the shift actuator control section 11h. When the rider operates the shift-up switch 9a or the shift-down switch 9b to input a gear shift command from the switch button, the shift actuator control section 11h actuates the shift actuator 16 to change the shift gears 53a, 53b, 54a, 54b. In the example described herein, when the shift-up switch 9a or the shift-down switch 9b is turned ON, the shift actuator control section 11h outputs a control signal to the shift actuator drive circuit 15 at start-up of the motorcycle 1 and in the state where the clutch 40 is disengaged and the gearbox 51 is set in the neutral position. The shift actuator 16 is actuated by the driving power supplied from the shift actuator drive circuit 15 in order to move some of the shift gears 53a, 53b, 54a, 54b.

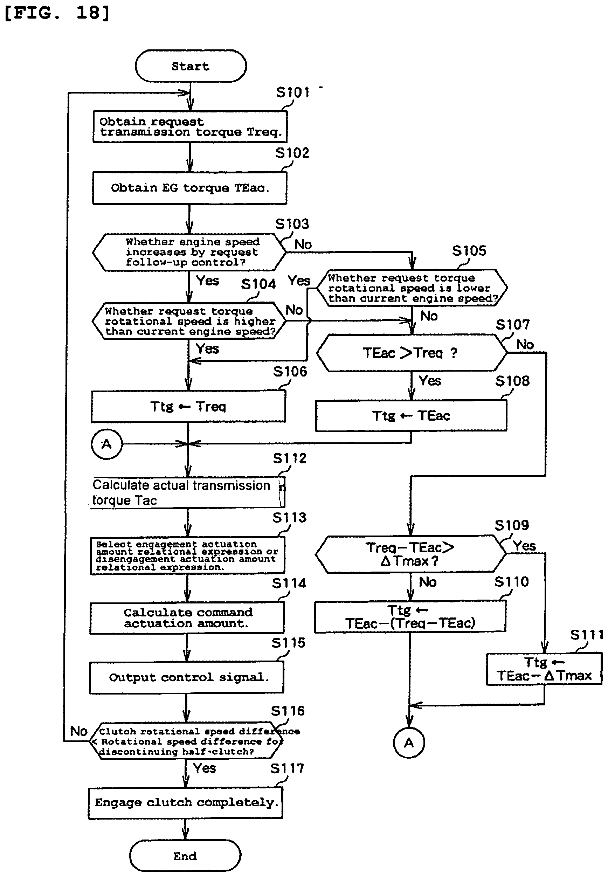

Now, description is made of a flow of the processing executed by the control unit 11. FIG. 18 is a flowchart showing an example of the processing executed by the control unit 11 at start-up of the motorcycle 1. The processing described herein starts when the vehicle start-up conditions are satisfied. The vehicle start-up conditions are that: for example, the clutch 40 is disengaged with the gearbox 51 set in a position other than neutral position; and the engine speed and the accelerator displacement are equal to or greater than their respective predetermined values. Alternatively, the start-up conditions may be that: the clutch 40 is disengaged with the gearbox 51 set in a position other than neutral position; and a value, which is obtained by subtracting the driven-side member 42 from the drive-side member 41 of the clutch 40, is a negative value.

If the vehicle start-up conditions are satisfied, the request torque obtaining section 11d first detects the accelerator displacement, and then refers to the request torque table (see FIG. 13) to obtain the request transmission torque Treq that corresponds to the detected accelerator displacement (step S101). In addition, the EG torque obtaining section 11a detects the engine speed and obtains the EG torque TEac based on the detected engine speed and accelerator displacement (step S102).

After that, the range determining section 11e estimates whether or not the EG torque TEac approximates the request transmission torque Treq in the case when the aforementioned request follow-up control is performed, and according to the estimation result, determines the current operation range of the engine 30 (steps S103 to S105). Specifically, the range determining section 11e determines whether or not the engine speed increases in the case when the request follow-up control is performed (step S103). In other words, the range determining section 11e determines whether or not the difference between the EG torque TEac and the request transmission torque Treq (TEac - Treq) is greater than 0. In this step, if the difference is greater than 0, the range determining section 11e determines that the engine speed increases and whether or not the request torque rotational speed Rreq is higher than the current engine speed (step S104). In this step, if the request torque rotational speed Rreq is higher than the current engine speed, the EG torque TEac should approximate the request transmission torque Treq due to the action of the aforementioned request follow-up control. Therefore, the range determining section 11e determines that the engine 30 operates currently in the torque-decreasing operation range. In this case, the processing of the control unit 11 continues to the step S106. In contrast, in the step S104, if the request torque rotational speed Rreq is lower than the current engine speed, the EG torque TEac deviates from the request transmission torque Treq due to the action of the request follow-up control. Therefore, the range determining section 11e determines that the engine 30 operates currently in the torque-increasing operation range. In this case, the processing of the control unit 11 continues to the step S107.

In addition, in the step S103, if the engine speed is determined to decrease in the case when the request follow-up control is performed (if the difference (TEac - Treq) is smaller than 0), the range determining section 11e determines whether or not the request torque rotational speed Rreq is lower than the current engine speed (step S105). In this step, if the request torque rotational speed Rreq is lower than the current engine speed, the EG torque TEac should naturally approximate the request transmission torque Treq due to the action of the request follow-up control. Therefore, the range determining section 11e determines that the engine 30 operates currently in the torque-decreasing operation range. Also in this case, the control unit 11 goes to the step S106 to continue the processing. In contrast, in the step S105, if the request torque rotational speed Rreq is determined to be higher than the current engine speed, the EG torque TEac deviates from the request transmission torque Treq due to the action of the request follow-up control. Therefore, the range determining section 11e determines that the engine 30 operates in the torque-increasing operation range. In this case, the control unit 11 goes to the step S107 to continue the processing.

As a result of the determinations of the processing steps S104 and S105, if the range determining section 11e determines that the current operating condition of the engine 30 falls within the torque-decreasing operation range, the target torque setting section 11f sets the target transmission torque Ttg as the request transmission torque Treq obtained in the step S101 (step S106). Thereby, the request follow-up control is performed under which the actual transmission torque Tac follows the request transmission torque Treq.

In contrast, if the range determining section 11e in the processing steps S104 and S105 determines that the current operating condition of the engine 30 falls within the torque-increasing operation range, the target torque setting section 11f determines whether or not the EG torque TEac obtained in the step S102 is higher than the request transmission torque Treq obtained in the step S101 (step S107). In this step, if the EG torque TEac is higher than the request transmission torque Treq, the target torque setting section 11f sets the target transmission torque Ttg as the EG torque TEac obtained in the step S102 (step S108). Thereby, the rotational speed maintaining control is performed in which the actual transmission torque Tac follows the EG torque TEac.

In contrast, if the EG torque TEac is not higher than the request transmission torque Treq in the processing step S107, the target torque setting section 11f executes the following processing, for example, in order to perform the rotational speed induction control. More specifically, the target torque setting section 11f determines whether or not the difference between the EG torque TEac and the request transmission torque Treq (Treq - TEac) is higher than the aforementioned maximum value ΔTmax (step S109). In this step, if the difference (Treq - TEac) is larger than the maximum value ΔTmax, the target torque setting section 11f subtracts the maximum value ΔTmax from the EG torque TEac and sets the obtained value as the target transmission torque Ttg (TEac - ΔTmax) (step S111). In contrast, if the difference (Treq - TEac) is not larger than the maximum value ΔTmax, the target torque setting section 11f assigns the EG torque TEac, which is obtained in the step S102, and the request transmission torque Treq, which is obtained in the step S101, to the aforementioned expression (2) in order to calculate the target transmission torque Ttg (step S110).

When the target transmission torque Ttg is set in the processing step S106, S108, S110 or S111, the actual transmission torque obtaining section 11b calculates the actual transmission torque Tac (step S112). Then, the clutch actuator control section 11g determines whether or not the clutch rotational speed difference is a positive value, based on the determination result, selects either then the aforementioned engagement actuation amount relational expression or disengagement actuation amount relational expression (step S113). Then, the clutch actuator control section 11g calculates the command actuation amount based on the difference between the target transmission torque Ttg and the actual transmission torque Tac (that is, the torque deviation) (step S114). Specifically, if the clutch rotational speed difference is negative, the clutch actuator control section 11g assigns the torque deviation (Ttg - Tac) to the disengagement actuation amount relational expression in order to calculate the command actuation amount. In contrast, if the clutch rotational speed difference is positive, the clutch actuator control section 11g assigns the torque deviation to the engagement actuation amount relational expression in order to calculate the command actuation amount. Then, the clutch actuator control section 11g outputs a control signal to the clutch actuator drive circuit 13 according to the command actuation amount (step S115). Thereby, the clutch actuator 14 is actuated for the amount according to the command actuation amount, so that the degree of engagement of the clutch 40 changes.

After that, the clutch actuator control section 11g recalculates the clutch rotational speed difference, and determines whether or not the recalculated clutch rotational speed difference is smaller than the rotational speed difference for discontinuing half-clutch (step S116). In this step, if the clutch rotational speed difference is smaller than the rotational speed difference for discontinuing half-clutch, the clutch actuator control section 11g allows the clutch 40 to be completely engaged (step S117). In contrast, if the clutch rotational speed difference has not been smaller than the rotational speed difference for discontinuing half-clutch, the control unit 11 returns to the step S101 to repeat the subsequent steps in a predetermined cycle (for example, several milliseconds) until the clutch 40 is completely engaged in the step S117. The aforementioned processing is an example of the processing executed by the control unit 11 at vehicle start-up.

Under the request follow-up control of the above-mentioned clutch controller 10, the control unit 11 actuates the clutch actuator 14 based on the difference between the actual transmission torque Tac and the request transmission torque Treq, such that Tac approximates Treq. This allows appropriate torque to be transmitted to the downstream side via the clutch 40 during engaging operation of the clutch 40. In addition, if the engine 30 operates in a predetermined operation range (the torque-increasing operation range in the above description), the control unit 11 performs the rotational speed maintaining control and makes the clutch actuator 14 actuate such that the actual transmission torque Tac approximates the EG torque TEac. This prevents the engine speed from excessive increase or decrease.

Further, in the clutch controller 10, the actual torque obtaining section 11b calculates the actual transmission torque Tac based on the EG torque TEac and the inertia torque TIac generated by the inertia of the mechanism (such as the crankshaft 34, the piston 32 the primary deceleration mechanism 36, and the like in the above description) located upstream of the drive-side member 41 in the torque transmission path. The actual transmission torque Tac is thus obtained without providing any specific sensor for outputting an electric signal according to the actual transmission torque Tac.

Still further, in the clutch controller 10, the control unit 11 performs the rotational speed maintaining control in place of the request follow-up control, if the engine 30 operates in the operation range in which the EG torque TEac increases along with the increase in the engine speed (that is, the torque-increasing operation range). This suppresses of the engine speed the excessive increase or decrease when the engine 30 operates in the torque-increasing operation range.

Still further, in the clutch controller 10, under the rotational speed maintaining control, the control unit 11 actuates the clutch actuator 14 based on the difference between the actual transmission torque Tac and the EG torque TEac, such that Tac approximates TEac. As described above, under the request follow-up control, the control unit 11 actuates the clutch actuator 14 based on the difference between the actual transmission torque Tac and the request transmission torque Treq. Therefore, under the rotational speed maintaining control, by actuating the clutch actuator 14 based on the difference between the actual transmission torque Tac and the EG torque Teac, it is possible to approximate the processing of the request follow-up control and of the rotational speed maintaining control, and thus to simplify the processing for controlling the clutch.

Still further, in the clutch controller 10, the control unit 11 includes the target torque setting section 11f for setting the torque that is supposed to be transmitted from the drive-side member 41 to the driven-side member 42 or the mechanism located downstream of the driven-side member 42 as the target transmission torque Ttg. Then, the control unit 11 actuates the clutch actuator 14 according to the difference between the target transmission torque Ttg and the actual transmission torque Tac. Further, the target torque setting section 11f sets the target transmission torque Ttg at the request transmission torque Treq under the request follow-up control, while setting the target transmission torque Ttg at the EG torque TEac under the rotational speed maintaining control. In this manner, by selectively setting the request transmission torque Treq and the EG torque Teac setting to the target transmission torque Ttg, it is possible to switch between the request follow-up control and the rotational speed maintaining control, and thus, to simplify the processing for controlling the clutch.

The present invention is not limited to the above-mentioned clutch controller 10 and can have various alternatives. For example, in the above description, if the current operating condition of the engine 30 falls within the torque-increasing operation range, and the detected EG torque TEac is higher than the request transmission torque Treq, the control unit 11 performs the rotational speed maintaining control in which the target transmission torque Ttg is set at the detected EG torque TEac. However, if the current operating condition of the engine 30 falls within the torque-increasing operation range, and the engine speed falls outside a predetermined range, the target torque setting section 11f may perform the rotational speed maintaining control. In addition, the target torque setting section 11f may set the target transmission torque Ttg by means of the similar processing under the aforementioned rotational speed induction control, unless the engine speed falls outside the predetermined range.

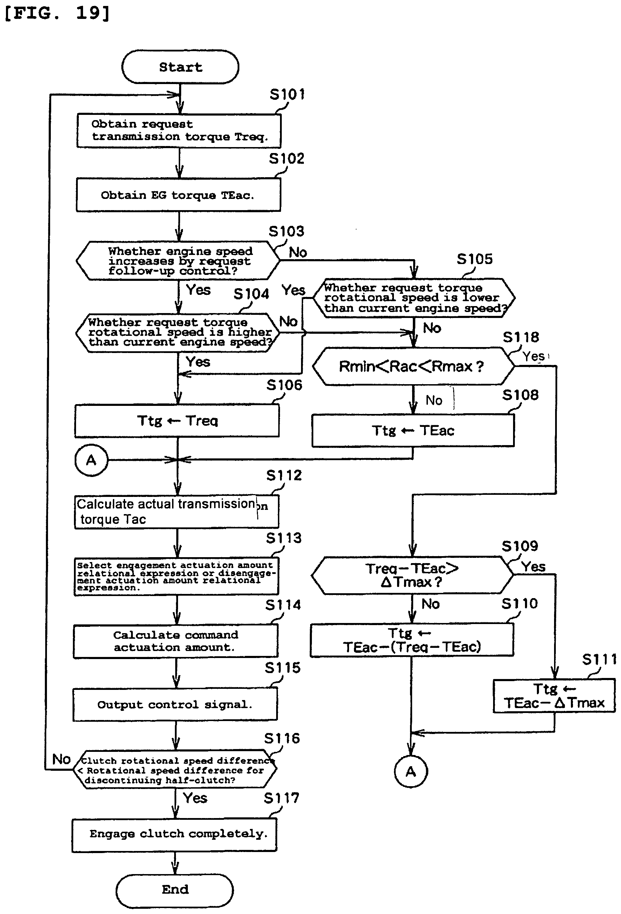

FIG. 19 is a flowchart showing an example of the processing executed by the control unit 11 according to the embodiment of the invention. In FIG. 19, the same processing steps as those shown in FIG. 18 are designated by the same numerals, and the description thereof is not repeated.

In this embodiment, as shown in FIG. 19, if the determination results in the steps S103 to S105 show that the current operating condition of the engine 30 falls within the torque-increasing operation range, the target torque setting section 11f calculates the engine speed Rac based on the signal of the engine speed detector 18. Then, the target torque setting section 11f determines whether or not the calculated engine speed Rac is higher than a predetermined minimum value Rmin and also is lower than a predetermined maximum value Rmax (step S118). In this step, the minimum value Rmin and the maximum value Rmax are referred to as engine speed in the torque-increasing operation range and are stored in the storage unit 12 in advance.

If the determination result in the step S118 shows that the engine speed is either equal to or higher than the maximum value Rmax or equal to or lower than the minimum value Rmin, the target torque setting section 11f sets the target transmission torque Ttg at the EG torque TEac (step S108). Thereby, the rotational speed maintaining control is performed. In contrast, if the engine speed Rac is higher than the minimum value Rmin and lower than the maximum value Rmax, the target torque setting section 11f determines whether or not the difference between the EG torque TEac and the request transmission torque Treq (Treq - TEac) is larger than the aforementioned maximum value ΔTmax (step S109), and then performs the subsequent process. Thereby, the rotational speed induction control is performed.

In this embodiment, the request follow-up control is replaced with the rotational speed maintaining control, if the engine 30 operates in an operation range in which the engine speed exceeds a predetermined value (the maximum value Rmax or the minimum value Rmin). This also makes it possible to prevent the engine speed from excessively increasing or decreasing even when the engine 30 operates in the torque-increasing operation range.

In turn, if the current operating condition of the engine 30 falls within the torque-decreasing operation range, and the engine speed exceeds a predetermined maximum value Rmax2 or a predetermined minimum value Rmin2, the control unit 11 may perform the rotational speed maintaining control. This prevents the engine speed from excessively increasing or decreasing during engaging operation of the clutch 40, even if the current operating condition of the engine 30 falls within the torque-decreasing operation range.

In addition, under the above-mentioned rotational speed induction control, the target torque setting section 11f controls the clutch actuator 14 by setting the target transmission torque Ttg in accordance with the request transmission torque Treq in order for the engine speed to reach the request torque rotational speed Rreq. In other words, the target torque setting section 11f assigns the request transmission torque Treq and the EG torque TEac to the aforementioned expression (2) in order to calculate the target transmission torque Ttg. However, under the rotational speed induction control, the target torque setting section 11f may set the target transmission torque Ttg according to a predetermined value (hereinafter referred to as fixed transmission torque) in place of the request transmission torque Treq. For example, the target torque setting section 11f may assign the fixed transmission torque, in place of the request transmission torque Treq, to the aforementioned expression (2) in order to calculate the target transmission torque Ttg. This allows the control unit 11 to actuate the clutch actuator 14 such that the engine speed approximates at which the EG torque TEac equal to the fixed transmission torque is outputted.

In addition, under the above-mentioned rotational speed maintaining control, the control unit 11 sets the target transmission torque Ttg at the EG torque TEac, and actuates the clutch actuator 14 according to the difference between the target transmission torque Ttg and the actual transmission torque Tac, thereby suppressing the changes in engine speed. However, the control unit 11 may perform the rotational speed maintaining control based on the engine speed rather than that based on the above torque difference. Such control is executed as follows, for example.

The storage unit 12 stores in advance a table that establishes the correspondence between the command actuation amount of the clutch actuator 14, and the rate-of-change of engine speed $\Omega e$ (the rate-of-change of EG speed ($d\Omega e / dt$)) and the clutch rotational speed difference. For example, this table is established such that as the rate-of-change of EG speed ($d\Omega e / dt$) increases, the command actuation amount increases. For example, this table is also established such that as the clutch rotational speed difference increases, the command actuation amount decreases. In the case where the storage unit 12 stores such a table, during engaging operation of the clutch 40, the control unit 11 calculates the rate-of-change of EG speed ($d\Omega e / dt$) in a predetermined cycle based on the signal inputted from the engine speed detector 18, while calculating the clutch rotational speed difference based on the signals inputted from the clutch rotational speed detectors 23a, 23b. Then, the control unit 11 refers to the aforementioned table to obtain the command actuation amount that corresponds to the calculated rate-of-change of EG speed ($d\Omega e / dt$) and clutch rotational speed difference, and outputs a control signal to the clutch actuator 14 according to the obtained command actuation amount. Due to the execution of such rotational speed maintaining control, the rate-of-change of EG speed ($d\Omega e / dt$) gradually decreases during the engaging operation of the clutch 40, and consequently, the actual transmission torque Tac approximates the EG torque TEac. Thus, the engine speed is prevented from excessively increasing or decreasing.

In turn, the control unit 11 may perform the rotational speed induction control based on the engine speed, rather than that based on the torque difference. Such control is executed as follows, for example.

The storage unit 12 stores in advance a table that establishes the correspondence between the command actuation amount, and the clutch rotational speed difference and the rate-of-change of the difference ($Rreq - \Omega e$) between

the request torque rotational speed Rreq and the current engine speed $\Omega e$ (d (Rreq - $\Omega e$) / dt). For example, this table is established such that as the rate-of-change (d (Rreq - $\Omega e$) / dt) increases, the command actuation amount increases. For example, this table is also established such that as the clutch rotational speed difference increases, the command actuation amount decreases. In the case when the storage unit 12 stores such a table, the control unit 11 obtains the request transmission torque Treq during the engaging operation of the clutch and refers to the aforementioned EG torque table to obtain the request torque rotational speed Rreq that corresponds to the obtained request transmission torque Treq. Then, the control unit 11 obtains the engine speed $\Omega e$ based on the signal inputted from the engine speed detector 18 and calculates the rate-of-change (d (Rreq - $\Omega e$) / dt). The control unit 11 also calculates the clutch rotational speed difference based on the signals inputted from the clutch rotational speed detectors 23a, 23b. Then, referring to the aforementioned command actuation amount correspondence table, the control unit 11 obtains the command actuation amount that corresponds to the rate-of-change (d (Rreq - $\Omega e$) / dt) and the clutch rotational speed difference, and outputs a control signal to the clutch actuator 14 according to the obtained command actuation amount. Due to the execution of such rotational speed induction control, the engine speed increases or decreases to the request torque rotational speed Rreq determined according toward the request transmission torque Treq, thereby preventing the engine speed from excessively increasing or decreasing.

The description above discloses, in order to solve the foregoing problems, an embodiment of a clutch controller including: an actuator for changing the degree of engagement between a drive-side member and a driven-side member of a clutch, the members being located downstream of an engine in a torque transmission path; an actual torque obtaining section for obtaining torque transmitted from the drive-side member to a downstream mechanism of the torque transmission path as actual transmission torque, the downstream mechanism including the driven-side member; a request torque obtaining section for obtaining torque determined based on rider's accelerator operation as request transmission torque; an engine torque obtaining section for obtaining torque outputted from the engine as engine torque; and a control unit for performing a first control under which the actuator is actuated based on a difference between the actual transmission torque and the request transmission torque, such that the actual transmission torque approximates the request transmission torque. The control unit determines whether or not the engine operates in a predetermined operation range, and depending on the determination result, performs a second control under which the actuator is actuated such that the actual transmission torque approximates the engine torque, in place of the first control.

In addition, the present teaching is directed to a straddle-type vehicle including the clutch controller.

Further, the present teaching is directed to a method of controlling a clutch including the steps of: obtaining torque transmitted from a drive-side member of the clutch to a downstream mechanism of a torque transmission path as actual transmission torque, the downstream mechanism including a driven-side member of the clutch; obtaining torque determined based on rider's accelerator operation as request transmission torque; obtaining engine torque outputted from an engine; performing a first control under which an actuator, which changes the degree of engagement between the drive-side member and the driven-side member, is actuated based on a difference between the actual transmission torque and the request transmission torque, such that the actual transmission torque approximates the request transmission torque; determining whether or not the engine operates in a predetermined operation range; and performing a second control under which the actuator is actuated such that the actual transmission torque approximates the engine torque, in place of the first control step, depending on the result from the determination step.

The present teaching allows appropriate torque to be transmitted to the downstream side via the clutch during engaging operation of the clutch. According to the present teaching, if the engine operates in the predetermined operation range, the actual transmission torque approximates the engine torque. This prevents an excessive increase or decrease in engine speed. That is, if the actual transmission torque is higher than the engine torque, the engine speed decreases, and if the actual transmission torque is lower than the engine torque, the engine speed increases. Also, for example, if the engine operates in an operation range in which the engine torque increases as the engine speed increases, an increase or a decrease in engine speed due to a difference between the actual transmission torque and the engine torque causes the difference between the actual transmission torque and the engine torque to be greater, and therefore, the engine speed further increases or decreases. According to the present teaching, if the engine operates in the predetermined operation range, the actuator is actuated such that the actual transmission torque approximates the engine torque. This prevents such an excessive increase or decrease in engine speed. The straddle-type vehicle may be a motorcycle (including a scooter), a four-wheeled buggy or a snowmobile, for example.

The description further discloses an embodiment of a clutch controller comprising: an actuator for changing the degree of engagement between a drive-side member and a driven-side member of a clutch, the members being located downstream of an engine in a torque transmission path; an actual torque obtaining section for obtaining torque transmitted from the drive-side member to a downstream mechanism of the torque transmission path as actual transmission torque, the downstream mechanism including the driven-side member; a request torque obtaining section for obtaining torque determined based on rider's accelerator operation as request transmission torque; an engine torque obtaining section for obtaining torque outputted from the engine as engine torque; and a control unit for performing a first control under which the actuator is actuated based on a difference between the actual transmission torque and the request transmission torque, such that the actual transmission torque approximates the request transmission torque, wherein the control unit determines whether or not the engine operates in a predetermined operation range, and depending on the determination result, performs a second control under which the actuator is actuated such that the actual transmission torque approximates the engine torque, in place of the first control.

Preferably, the actual torque obtaining section calculates the actual transmission torque based on the engine torque and inertia torque produced due to inertia of a mechanism upstream of the drive-side member in the torque transmission path.

Further, preferably the control unit performs the second control in place of the first control, if the engine operates in an operation range in which the engine torque increases as the engine speed increases.

Further, preferably the control unit performs the second control in place of the first control, if the engine operates in an operation range in which the engine speed exceeds a predetermined value.

Further, preferably the control unit actuates the actuator based on the difference between the actual transmission torque and the engine torque, such that the actual transmission torque approximates the engine torque, under the second control.

Further, preferably the control unit includes a target torque setting section for setting a target transmission torque at torque, which is supposed to be transmitted from the drive-side member to the downstream mechanism, and actuates the actuator according to a difference between the target transmission torque and the actual transmission torque, and the target torque setting section sets the target transmission torque at the request transmission torque under the first control, while setting the target transmission torque at the engine torque under the second control.

The description still further discloses a straddle-type vehicle comprising the clutch controller according to one of the above embodiments.

The description still further discloses a method of controlling a clutch comprising the steps of: obtaining torque transmitted from a drive-side member of the clutch to a downstream mechanism of a torque transmission path as actual transmission torque, the downstream mechanism including a driven-side member of the clutch; obtaining torque determined based on rider's accelerator operation as request transmission torque; obtaining engine torque outputted from an engine; performing a first control under which an actuator, which changes the degree of engagement between the drive-side member and the driven-side member, is actuated based on a difference between the actual transmission torque and the request transmission torque, such that the actual transmission torque approximates the request transmission torque; determining whether or not the engine operates in a predetermined operation range; and performing a second control under which the actuator is actuated such that the actual transmission torque approximates the engine torque, in place of the first control step, depending on the result from the determination step.

The description particularly discloses, in order to provide a clutch controller which can transmit appropriate torque during engaging operation of a clutch and prevent an excessive increase or decrease in engine speed, an embodiment of a clutch controller which performs request follow-up control under which a clutch actuator is actuated based on a difference between actual transmission torque Tac, which is transmitted from a drive-side member to a driven-side member of a clutch, and request transmission torque Treq, which is determined based on rider's accelerator operation, such that the actual transmission torque Tac approximates the request transmission torque Treq. Therein, if an engine operates in a predetermined operation condition, the clutch controller performs rotational speed maintaining control under which the clutch actuator is actuated such that the actual transmission torque Tac approximates engine torque TEac, in place of the request follow-up control.

**Claims**

1. Vehicle having an engine (30) and a clutch means (40) provided in a torque transmission path, said clutch means (40) comprising
   an actuator (14) for changing the degree of engagement between a drive-side member (41) and a driven-side member (42) of the clutch, the members (41,42) being located downstream of the engine (30) in the torque transmission path, and a clutch controller (10), said clutch controller (10) comprising:

   • an actual torque obtaining section (11b) for obtaining torque transmitted from the drive-side member (41) to a downstream mechanism of the torque transmission path as actual transmission torque (Tac), the downstream mechanism including the driven-side member (42);
   • a request torque obtaining section (11d) for obtaining torque determined based on an accelerator operation as request transmission torque (Treq);
   • an engine torque obtaining section (11a) for obtaining torque outputted from the engine as engine torque (TEac); and

a control unit (11), wherein

said control unit (11) being configured to determine an operation range of the engine (30), and, based on the determination results, to perform either a first control process or a second control process to actuate the actuator (14), both control processes being dependent on torque difference **characterized in that,**

in a first engine operation range the control unit (11) is configured to apply the first control process under which the actuator (14) is actuated based on a difference between the actual transmission torque (Tac) and the request transmission torque (Treq), such that the actual transmission torque (Tac) approximates the request transmission torque (Treq), and, in a second operation range, to apply the second control process under which the actuator (14) is actuated such that the actual transmission torque (Tac) approximates the engine torque (TEac), in place of the first control process, wherein

the control unit (11) is configured to perform the second control process in place of the first control process, if the engine (30) operates in an operation range in which the engine torque (TEac) increases as the engine speed increases.

2.  Vehicle according to claim 1, wherein the actual torque obtaining section (11b) is configured to calculate the actual transmission torque (Tac) based on the engine torque (TEac) and inertia torque produced due to inertia of a mechanism upstream of the drive-side member (41) in the torque transmission path.

3.  Vehicle according to claim 1, wherein the control unit (11) is configured to perform the second control process in place of the first control process, under the additional constraint that the engine (30) operates in an operation range in which the engine speed exceeds a predetermined value.

4.  Vehicle according to one of the claims 1 to 3, wherein the control unit (11) is configured to actuate the actuator (14) based on the difference between the actual transmission torque (Tac) and the engine torque (TEac), such that the actual transmission torque (Tac) approximates the engine torque (TEac), under the second control process.

5.  Vehicle according to one of the claims 1 to 4, wherein the control unit (11) further includes a target torque setting section (11f) for setting a target transmission torque (Ttg) at torque, which is supposed to be transmitted from the drive-side member (41) to the downstream mechanism, and is configured to actuate the actuator (14) according to a difference between the target transmission torque (Ttg) and the actual transmission torque (Tac), and the target torque setting section (11f) is configured to set the target transmission torque (Ttg) at the request transmission torque (Treq) under the first control process, while setting the target transmission torque (Ttg) at the engine torque (TEac) under the second control process.

6.  Method of controlling a clutch (40) for the vehicle according claim 1, the method comprising the steps of:

    obtaining torque transmitted from a drive-side member (41) of the clutch to a downstream mechanism of a torque transmission path as actual transmission torque (Tac), the downstream mechanism including a driven-side member (42) of the clutch (40);
    obtaining torque determined based on accelerator operation as request transmission torque (Treq);
    obtaining engine torque (TEac) outputted from an engine (30);
    determining the engine operation range, **characterized by**
    performing a first control process when the engine (30) is in a first operation range, and performing a second control process, in place of the first control process, when the engine (30) operates in a second operation range.

7.  Method according to claim 6, comprising the steps of:

    determining the engine operation range;
    performing the first control process, under which an actuator (14), which changes the degree of engagement between the drive-side member (41) and the driven-side member (42), is actuated based on a difference between the actual transmission torque (Tac) and the request transmission torque (Treq), such that the actual transmission torque (Tac) approximates the request transmission torque (Treq) in a first operation range, and
    performing the second control process, under which the actuator (14) is actuated such that the actual transmission torque (Tac) approximates the engine torque (TEac), in place of the first control process in a second operation range.

**EP 1 975 442 B1**

**Patentansprüche**

1. Fahrzeug mit einem Motor (30) und einem Kupplungsmittel (40) angeordnet in einem Drehmomentübertragungsweg, wobei das Kupplungsmittel (40) umfasst

   ein Stellglied (14) zum Ändern des Eingriffsgrads zwischen einem antriebsseitigen Element (41) und einem abtriebsseitigen Element (42) der Kupplung, wobei die Elemente (41, 42) stromabwärts vom Motor (30) im Drehmomentübertragungsweg angeordnet sind, und ein Kupplungssteuergerät (10), wobei das Kupplungssteuergerät (10) umfasst:

   • einen Istdrehmoment-Ermittlungsabschnitt (11b) zum Ermitteln des vom antriebsseitigen Element (41) auf einen stromabwärts angeordneten Mechanismus des Drehmomentübertragungsweges übertragenen Drehmoments als Istübertragungsdrehmoment (Tac), wobei der stromabwärts angeordnete Mechanismus das abtriebsseitige Element (42) umfasst;
   • einen Anforderungsdrehmoment-Ermittlungsabschnitt (11d) zum Ermitteln des auf der Basis einer Gaspedalbetätigung bestimmten Drehmoments als Anforderungsdrehmoment (Treq);
   • einen Motordrehmoment-Ermittlungsabschnitt (11a) zum Ermitteln des vom Motor ausgegebenen Drehmoments als Motordrehmoment (TEac); und

   eine Steuereinheit (11), wobei
   die Steuereinheit (11) zum Bestimmen eines Betriebsbereichs des Motors (30) und auf der Basis der Bestimmungsergebnisse zum Durchführen entweder eines ersten Steuerprozesses oder eines zweiten Steuerprozesses zum Betätigen des Stellglieds (14) ausgebildet ist, wobei beide Steuerprozesse vom Drehmomentunterschied abhängen, **dadurch gekennzeichnet, dass**
   in einem ersten Motorbetriebsbereich die Steuereinheit (11) zum Anwenden des ersten Steuerprozesses, in dem das Stellglied (14) auf der Basis eines Unterschieds zwischen dem Istübertragungsdrehmoment (Tac) und dem Anforderungsdrehmoment (Treq) betätigt wird, so dass sich das Istübertragungsdrehmoment (Tac) dem Anforderungsdrehmoment (Treq) annähert, und in einem zweiten Betriebsbereich zum Anwenden des zweiten Steuerprozesses, in dem das Steuerglied (14) so betätigt wird, dass sich das Istübertragungsdrehmoment (Tac) dem Motordrehmoment (TEac) annähert, statt dem ersten Steuerprozess ausgebildet ist, wobei
   die Steuereinheit (11) zum Durchführen des zweiten Steuerprozesses statt dem ersten Steuerprozess ausgebildet ist, wenn der Motor (30) in einem Betriebsbereich betrieben wird, in dem das Motordrehmoment (TEac) zunimmt, wenn die Motordrehzahl zunimmt.

2. Fahrzeug nach Anspruch 1, wobei der Istdrehmoment-Ermittlungsabschnitt (11b) zum Berechnen des Istübertragungsdrehmoments (Tac) auf der Basis des Motordrehmoments (TEac) und des aufgrund der Trägheit eines Mechanismus stromaufwärts vom antriebsseitigen Element (41) im Drehmomentübertragungsweg erzeugten Trägheitsmoments ausgebildet ist.

3. Fahrzeug nach Anspruch 1, wobei die Steuereinheit (11) zum Durchführen des zweiten Steuerprozesses statt dem ersten Steuerprozess unter der Bedingung, dass der Motor (30) in einem Betriebsbereich, in dem die Motordrehzahl einen vorgegebenen Wert überschreitet, betrieben wird, ausgebildet ist.

4. Fahrzeug nach einem der Ansprüche 1 bis 3, wobei die Steuereinheit (11) zum Betätigen des Stellglieds (14) auf der Basis des Unterschieds zwischen dem Istübertragungsdrehmoment (Tac) und dem Motordrehmoment (TEac), so dass sich das Istübertragungsdrehmoment (Tac) dem Motordrehmoment (TEac) annähert, im zweiten Steuerprozess ausgebildet ist.

5. Fahrzeug nach einem der Ansprüche 1 bis 4, wobei die Steuereinheit (11) ferner einen Solldrehmoment-Festlegungsabschnitt (11f) zum Festlegen eines Sollübertragungsmoments (Ttg) auf ein Drehmoment, von dem angenommen wird, dass es vom antriebsseitigen Element (41) auf den stromabwärts angeordneten Mechanismus zu übertragen ist, umfasst und zum Betätigen des Stellglieds (14) gemäß einem Unterschied zwischen dem Sollübertragungsdrehmoment (Ttg) und dem Istübertragungsdrehmoment (Tac) ausgebildet ist, und der Solldrehmoment-Festlegungsabschnitt (11f) zum Festlegen des Sollübertragungsdrehmoments (Ttg) auf das Anforderungsübertragungsdrehmoment (Treq) im ersten Steuerprozess, während das Sollübertragungsdrehmoment (Ttg) auf das Motordrehmoment (TEac) im zweiten Steuerprozess festgelegt wird, ausgebildet ist.

6. Verfahren zum Steuern einer Kupplung (40) für das Fahrzeug nach Anspruch 1, wobei das Verfahren die Schritte umfasst zum:

Ermitteln des von einem antriebsseitigen Element (41) der Kupplung auf einen stromabwärts angeordneten Mechanismus eines Drehmomentübertragungswegs übertragenen Drehmoments als Istübertragungsdrehmoment (Tac), wobei der stromabwärts angeordnete Mechanismus ein abtriebsseitiges Element (42) der Kupplung (40) umfasst;

Ermitteln des auf der Basis der Gaspedalbetätigung bestimmten Drehmoments als Anforderungsübertragungsdrehmoment (Treq);

Ermitteln des von einem Motor (30) ausgegebenen Motordrehmoments (TEac); Bestimmen des Motorbetriebsbereichs, **gekennzeichnet durch**

Durchführen eines ersten Steuerprozesses, wenn sich der Motor (30) in einem ersten Betriebsbereich befindet, und Durchführen eines zweiten Steuerprozesses statt dem ersten Steuerprozess, wenn der Motor (30) in einem zweiten Betriebsbereich betrieben wird.

7. Verfahren nach Anspruch 6, umfassend die Schritte zum:

Bestimmen des Motorbetriebsbereichs;

Durchführen des ersten Steuerprozesses, in dem ein Stellglied (14), das den Eingriffsgrad zwischen dem antriebsseitigen Element (41) und dem abtriebsseitigen Element (42) ändert, auf der Basis eines Unterschieds zwischen dem Istübertragungsdrehmoment (Tac) und dem Anforderungsdrehmoment (Treq) betätigt wird, so dass sich das Istübertragungsdrehmoment (Tac) dem Anforderungsübertragungsdrehmoment (Treq) in einem ersten Betriebsbereich annähert, und

Durchführen des zweiten Steuerprozesses, in dem das Stellglied (14) so betätigt wird, dass sich das Istübertragungsdrehmoment (Tac) dem Motordrehmoment (TEac) annähert, statt dem ersten Steuerprozess in einem zweiten Betriebsbereich.

## Revendications

1. Véhicule possédant un moteur (30) et un moyen d'embrayage (40) situé dans un chemin de transmission de couple, ledit moyen d'embrayage (40) comprenant :

un actionneur (14) pour changer le degré de mise en prise entre un élément côté menant (41) et un élément côté mené (42) de l'embrayage, les éléments (41, 40) étant situés en aval du moteur (30) dans le chemin de transmission de couple, et un système de commande d'embrayage (10), ledit système de commande d'embrayage (10) comprenant :

- une section d'obtention de couple réel (11b) permettant d'obtenir un couple transmis de l'élément côté menant (41) à un mécanisme d'aval du chemin de transmission de couple, en tant que couple de transmission réel (Tac), le mécanisme d'aval incluant l'élément côté mené (42) ;
- une section d'obtention de couple de demande (11d) pour obtenir un couple déterminé sur la base de l'actionnement d'un accélérateur, en tant que couple de transmission de demande (Treq) ;
- une section d'obtention de couple moteur (11a) pour obtenir un couple fourni en sortie de moteur, en tant que couple moteur (TEac) ; et

un module de commande (11), dans lequel ledit module de commande (11) est conçu pour déterminer une plage de fonctionnement du moteur (30) et, en fonction des résultats de la détermination, pour exécuter soit un premier processus de commande, soit un second processus de commande pour actionner l'actionneur (14), les deux processus de commande dépendant d'une différence de couple, **caractérisé en ce que**, dans une première plage de fonctionnement du moteur, le module de commande (11) est conçu pour appliquer le premier processus de commande selon lequel l'actionneur (14) est actionné en fonction d'une différence entre le couple de transmission réel (Tac) et le couple de transmission de demande (Treq), de façon que le couple de transmission réel (Tac) s'approche du couple de transmission de demande (Treq) et, dans une seconde plage de fonctionnement, pour appliquer le second processus de commande selon lequel l'actionneur (14) est actionné de façon que le couple de transmission réel (Tac) s'approche du couple moteur (TEac), à la place du premier processus de commande, dans lequel le module de commande (11) est conçu pour exécuter le second processus de commande à la place du premier processus de commande si le moteur (30) fonctionne dans une plage de fonctionnement dans laquelle le couple moteur (TEac) augmente à mesure que le régime moteur augmente.

**2.** Véhicule selon la revendication 1, dans lequel la section d'obtention de couple réel (11b) est conçue pour calculer le couple de transmission réel (Tac) sur la base du couple moteur (TEac) et d'un couple d'inertie produit en raison de l'inertie d'un mécanisme en amont de l'élément côté menant (41) dans le chemin de transmission de couple.

**3.** Véhicule selon la revendication 1, dans lequel le module de commande (11) est conçu pour exécuter le second processus de commande à la place du premier processus de commande, dans le cadre de cette contrainte supplémentaire que le moteur (30) fonctionne dans une plage de fonctionnement dans laquelle le régime moteur dépasse une valeur prédéterminée.

**4.** Véhicule selon l'une des revendications 1 à 3, dans lequel le module de commande (11) est conçu pour actionner l'actionneur (14) en fonction de la différence entre le couple de transmission réel (Tac) et le couple moteur (TEac) de façon que le couple de transmission réel (Tac) s'approche du couple moteur (TEac), selon le second processus de commande.

**5.** Véhicule selon l'une des revendications 1 à 4, dans lequel le module de commande (11) inclut, en outre, une section de réglage de couple cible (11f) pour régler un couple de transmission cible (Ttg) au niveau d'un couple qui est supposé être transmis de l'élément côté menant (41) au mécanisme d'aval, et est conçu pour actionner l'actionneur (14) en fonction d'une différence entre le couple de transmission cible (Ttg) et le couple de transmission réel (Tac), et la section de réglage de couple cible (11f) est conçue pour régler le couple de transmission cible (Ttg) au niveau du couple de transmission de demande (Treq) selon le premier processus de commande, tandis qu'elle règle le couple de transmission cible (Ttg) au niveau du couple moteur (TEac) selon le second processus de commande.

**6.** Procédé de commande d'embrayage (40) pour véhicule selon la revendication 1, le procédé comprenant ces étapes :

obtention d'un couple transmis d'un élément côté menant (41) de l'embrayage à un mécanisme d'aval d'un chemin de transmission de couple, en tant que couple de transmission réel (Tac), le mécanisme d'aval incluant un élément côté mené (42) de l'embrayage (40) ;
obtention d'un couple déterminé sur la base de l'actionnement d'un accélérateur, en tant que couple de transmission de demande (Treq) ;
obtention d'un couple moteur (TEac) fourni en sortie d'un moteur (30) ;
détermination de la plage de fonctionnement du moteur, **caractérisé par**
l'exécution d'un premier processus de commande lorsque le moteur (30) se trouve dans une première plage de fonctionnement et l'exécution d'un second processus de commande à la place du premier processus de commande lorsque le moteur (30) fonctionne dans une seconde plage de fonctionnement.

**7.** Procédé selon la revendication 6, comprenant ces étapes :

détermination de la plage de fonctionnement du moteur ;
exécution du premier processus de commande, selon lequel un actionneur (14), qui modifie le degré de mise en prise entre l'élément côté menant (41) et l'élément côté mené (42), est actionné en fonction d'une différence entre le couple de transmission réel (Tac) et le couple de transmission de demande (Treq), de façon que le couple de transmission réel (Tac) s'approche du couple de transmission de demande (Treq) dans une première plage de fonctionnement, et
exécution du second processus de commande, selon lequel l'actionneur (14) est actionné de façon que le couple de transmission réel (Tac) s'approche du couple moteur (TEac), à la place du premier processus de commande, dans une seconde plage de fonctionnement.

EP 1 975 442 B1

[FIG. 1]

24

[FIG. 2]

[FIG. 3]

EP 1 975 442 B1

[FIG. 4]

[FIG. 5]

**(a)**

**(b)**

**(c)**

[FIG. 6]

[FIG. 7]

(N·m)

EG torque

L1

E1

Actual transmission torque Tac
(Target transmission torque Ttg,
Request transmission torque Treq)

E2

0

Rreq

Engine speed

(rpm)

EP 1 975 442 B1

[FIG. 8]

**(a)**

Disengagement

Degree of engagement

Engagement

t1    t2    t3    Time (msec)

**(b)**    (N·m)

Ttg

Treq

Torque

0    t1    t3    Time (msec)

**(c)**    (N·m)

TEac

Tac

Torque

0    t1    t2    t3    Time (msec)

[FIG. 9]

**[FIG. 10]**

**(a)**

**(b)**

**(c)**

[FIG. 11]

[FIG. 12]

[FIG. 13]

[FIG. 14]

| Engine speed (rpm) / Accelerator displacement(%) | 3000 | 3010 | 3020 | ... | ... | 8990 | 9000 |
|---|---|---|---|---|---|---|---|
| 0% | Decrease | Decrease | Decrease | ... | ... | | |
| 5% | Decrease | Decrease | Decrease | ... | ... | | |
| 10% | Decrease | Decrease | Decrease | ... | ... | | |
| ... | ... | ... | ... | ... | ... | ... | ... |
| ... | ... | ... | ... | ... | ... | ... | ... |
| 95% | Increase | Increase | Increase | ... | ... | Decrease | Decrease |
| 100% | Increase | Increase | Increase | ... | ... | Decrease | Decrease |

[FIG. 15]

| Engine speed (rpm) / Accelerator displacement(%) | ... | 4950 | 5000 | 5050 | ... | 6000 | 6050 | 6100 | ... |
|---|---|---|---|---|---|---|---|---|---|
| ... | ... | ... | ... | ... | ... | ... | ... | ... | ... |
| 70% | ... | 0.55 | 0.60 | 0.65 | ... | 0.90 | 0.95 | 1.00 | ... |
| 75% | ... | 0.60 | 0.65 | 0.70 | ... | 0.95 | 1.00 | 1.05 | ... |
| 80% | ... | 0.65 | 0.70 | 0.75 | ... | 1.00 | 1.05 | 1.10 | ... |
| 85% | ... | 0.70 | 0.75 | 0.80 | ... | 1.05 | 1.10 | 1.15 | ... |
| ... | ... | ... | ... | ... | ... | ... | ... | ... | ... |

[FIG. 16]

Engagement direction

Command actuation amount

0    Torque deviation (Ttg − Tac)(N m)

Disengagement direction

[FIG. 17]

[FIG. 18]

```
                        ( Start )

                            │      S101
                            ▼
              ┌──────────────────────────┐
              │ Obtain request           │
              │ transmission torque Treq.│
              └──────────────────────────┘
                            │      S102
                            ▼
              ┌──────────────────────────┐
              │ Obtain EG torque TEac.   │
              └──────────────────────────┘
                            │      S103
                            ▼                                S105
           ╱ Whether engine speed ╲  No                      ▼
          ⟨  increases by request   ⟩──────────────►╱ Whether request torque ╲
           ╲ follow-up control?    ╱                ⟨  rotational speed is lower ⟩
                     │                               ╲ than current engine speed?╱
                    Yes     S104      Yes                       │ No
                     ▼                 ▲                        ▼              S107
           ╱ Whether request torque ╲  │          ╱ TEac > Treq ? ╲  No
          ⟨  rotational speed is higher⟩─┘         ⟨                ⟩────────┐
           ╲ than current engine speed?╱   No       ╲              ╱         │
                     │                                     │ Yes    S108     │
                    Yes                                    ▼                 │
                     │        S106                 ┌──────────────┐          │
                     ▼                             │ Ttg ← TEac   │          │
           ┌──────────────────┐                    └──────────────┘          │
           │ Ttg ← Treq       │                           │                  │
           └──────────────────┘                           │                  │
                     │                                     │                  │
          (A)◄───────┼───────────────────────◄────────────┘                  │
                     │        S112                                           │
                     ▼                                                       │
           ┌──────────────────────────┐                                     │
           │ Calculate actual         │                                     │
           │ transmission torque Tac  │                                     │
           └──────────────────────────┘                                     │
                     │        S113                         S109             │
                     ▼                                      ▼               │
           ┌──────────────────────────┐          ╱ Treq − TEac > ╲  Yes     │
           │ Select engagement actuation│        ⟨   ΔTmax ?       ⟩────────┐│
           │ amount relational expression│        ╲               ╱         ││
           │ or disengagement actuation  │               │ No      S110     ││
           │ amount relational expression.│              ▼                  ││
           └──────────────────────────┘        ┌──────────────────┐        ││
                     │        S114             │ Ttg ←            │        ││
                     ▼                          │ TEac−(Treq−TEac) │        ││
           ┌──────────────────────────┐         └──────────────────┘   S111││
           │ Calculate command        │                 │               ▼  ││
           │ actuation amount.        │                 │         ┌──────────┐
           └──────────────────────────┘                 │         │ Ttg ←    │
                     │        S115                       │         │ TEac−ΔTmax│
                     ▼                                   │         └──────────┘
           ┌──────────────────────────┐                 │              │
           │ Output control signal.   │                 ▼◄─────────────┘
           └──────────────────────────┘                 │
                     │        S116                       ▼
         No ╱Clutch rotational speed difference╲        (A)
        ┌──⟨ < Rotational speed difference for  ⟩
        │   ╲discontinuing half-clutch?        ╱
        │            │
        │           Yes     S117
        │            ▼
        │  ┌──────────────────────────┐
        │  │ Engage clutch completely.│
        │  └──────────────────────────┘
        │            │
        │            ▼
        │        ( End )
        └──────────────► (back to S101)
```

[FIG. 19]

```
                    ┌──────────────┐
                    │    Start     │
                    └──────┬───────┘
                           │                S101
                    ┌──────▼───────────┐
              ┌────▶│ Obtain request   │
              │     │ transmission     │
              │     │ torque Treq.     │
              │     └──────┬───────────┘
              │                         S102
              │     ┌──────▼───────────┐
              │     │ Obtain EG torque │
              │     │ TEac.            │
              │     └──────┬───────────┘
```

S103 — Whether engine speed increases by request follow-up control?  — No → S105 Whether request torque rotational speed is lower than current engine speed?

Yes → S104 Whether request torque rotational speed is higher than current engine speed? — No

Yes → S106 Ttg ← Treq

S105 No → S118 Rmin<Rac<Rmax ? — Yes

No → S108 Ttg ← TEac

(A)

S112 Calculate actual transmission torque Tac

S113 Select engagement actuation amount relational expression or disengagement actuation amount relational expression.

S114 Calculate command actuation amount.

S115 Output control signal.

S116 Clutch rotational speed difference < Rotational speed difference for discontinuing half-clutch? — No

Yes → S117 Engage clutch completely.

End

S109 Treq−TEac > ΔTmax ? — Yes

No → S110 Ttg ← TEac−(Treq−TEac)

S111 Ttg ← TEac−ΔTmax

(A)

**EP 1 975 442 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001146930 A
- DE 102005030534 A1
- EP 1617058 A2
- US 2005221958 A1